(19) Europäisches Patentamt / European Patent Office / Office européen des brevets

(11) **EP 1 919 742 B1**

(12) **EUROPÄISCHE PATENTSCHRIFT**

(45) Veröffentlichungstag und Bekanntmachung des Hinweises auf die Patenterteilung:
**07.01.2009 Patentblatt 2009/02**

(21) Anmeldenummer: 06793044.6

(22) Anmeldetag: **29.08.2006**

(51) Int Cl.:
***B60R 22/34*** *(2006.01)*

(86) Internationale Anmeldenummer:
**PCT/EP2006/065757**

(87) Internationale Veröffentlichungsnummer:
**WO 2007/025957 (08.03.2007 Gazette 2007/10)**

(54) **GURTAUFROLLER**

BELT RETRACTOR

ENROULEUR DE CEINTURE

(84) Benannte Vertragsstaaten:
**DE FR GB IT**

(30) Priorität: **30.08.2005 DE 102005041098**

(43) Veröffentlichungstag der Anmeldung:
**14.05.2008 Patentblatt 2008/20**

(73) Patentinhaber: **Continental Automotive GmbH**
**30165 Hannover (DE)**

(72) Erfinder:
• **LÜDICKE, Daniel**
**44139 Dortmund (DE)**
• **BREITSCHUH, Stefan**
**82239 Alling (DE)**
• **SCHAUTT, Martin**
**80636 München (DE)**

(56) Entgegenhaltungen:
**EP-A- 1 060 960     WO-A-03/076238**
**DE-A1- 19 640 842**

## Beschreibung

Die Erfindung betrifft einen Gurtaufroller, der insbesondere zur Verwendung in einem adaptiven Sicherheitsgurtsystem geeignet ist. Solch einen Gurtaufroller gemäß dem Oberbegriff des Anspruchs 1 ist z.B aus der DE 196 40 842 A1 bekannt.

Klassische 3-(Halte)Punkt-Gurtsysteme für einen Vordersitz besitzen üblicherweise einen unteren Haltepunkt, der sich unterhalb eines Sitzes im Bereich der B-Säule eines Kraftfahrzeugs befindet. Ein Gurtband wird von diesem Haltepunkt über das Becken eines Fahrzeuginsassen zu einem an einer Mittelkonsole angebrachten Gurtschloss durchgeführt. Das Gurtband wird weiter über die Brust des Insassen zu einem Umlenkpunkt auf Höhe des Halses des Insassen an der B-Säule geführt, worauf es im Wesentlichen parallel an einer Innenseite der B-Säule zu einer Gurtrolle mit einem Sperrsystem geführt wird, das auf verschiedene Art und Weise ausgebildet sein kann.

Precrash-Zusatzsysteme, wie Gurtstraffer, können das Gurtband vor einem Crash straff ziehen, um die Bremszeit und den relativen Bremsweg des Insassen zu vergrößern. Gurtstraffersysteme befinden sich üblicherweise am Gurtschloss oder an der Gurtrolle. Die technischen Ausführungsformen lassen sich in zwei Gruppen unterteilen: reversible und irreversible Systeme. Irreversible Systeme sind nur einmal benutzbar, wobei die am weitesten verbreitete Form der irreversiblen Systeme pyrotechnisch angetrieben wird. Bei einer Auslösung des Gurtstraffers wird das Gurtband angezogen, so dass der Fahrzeuginsasse in eine optimale Sitzposition gezogen wird und das Gurtband danach straff am Körper anliegt.

Im Crashfall wird bei aktuellen Systemen das Sperrsystem durch einen Mechanismus, entweder mechanisch, beispielsweise durch eine Klinken-, Fliehkraft- oder Trägheitsvorrichtung, oder elektronisch durch eine Steuereinheit, beispielsweise in Reaktion auf ein entsprechendes Signal eines Beschleunigungssensors eingeschaltet.

Um durch das Sicherheitsgurtsystem verursachten Verletzungen vorzubeugen, ist üblicherweise ferner ein Gurtkraftbegrenzer vorgesehen, der die von dem Gurtband auf den Fahrzeuginsassen aufgebrachte Krafteinwirkung, beispielsweise durch eine Verformung eines Torsionsstabs ab einer vorbestimmten Gurtkraft, begrenzt. Nach Auslösung des Sperrsystems wird der Kraftfluss in dem Sicherheitsgurtsystem über den Torsionsstab geleitet, der sich, wie oben erwähnt, ab einer vorbestimmten Gurtlast verformt und somit die von dem Gurtband auf den Fahrzeuginsassen aufgebrachte Krafteinwirkung begrenzt.

Bei den meisten derzeit bekannten Sicherheitsgurtsystemen ist demnach ein Gurtkraftniveau festgelegt, ab dem eine Verformung des Torsionsstabs und somit eine Gurtkraftbegrenzung möglich ist. Einige Systeme ermöglichen eine einmalige mechanische Umschaltung zwischen zwei verschiedenen Gurtkraftniveaus. Bei allen Systemen besteht jedoch die Notwendigkeit, das Gurtkraftniveau/die Gurtkraftniveaus für eine Verformung des Torsionsstabs bereits bei der Konstruktion des Systems, beispielsweise durch eine entsprechende Auslegung des Torsionsstabs festzulegen. Dabei wird üblicherweise auf Durchschnitts- und/oder Erfahrungswerte für Größe und Gewicht eines Fahrzeuginsassen, die Sitzposition, die Fahr- bzw. Crashsituation, etc. zurückgegriffen.

Infolgedessen besteht die Möglichkeit, dass beispielsweise bei sehr kleinen, leichtgewichtigen Fahrzeuginsassen im Crashfall das Gurtkraftniveau für eine ausreichende Verformung des Torsionsstabs nicht erreicht wird. Dies kann zu einem gesteigerten Verletzungsrisiko führen. Bei sehr großen, schwergewichtigen Fahrzeuginsassen kann dagegen eine durch die Gurtkraftbegrenzung verursachte ungenügende Abbremswirkung des Gurtsystems auftreten, so dass die Möglichkeit besteht, dass diese Personen bei einem Crash gegebenenfalls zu weit in den Airbag eintauchen.

Darüber hinaus sind diese Systeme nicht dazu in der Lage, auf eine Veränderung anderer Parameter, wie z.B. eine Fehlposition ("out of position") eines Fahrzeuginsassen oder spezifische Fahr- bzw. Crashsituationen zu reagieren, die beispielsweise durch eine bestimmte Fahrgeschwindigkeit, einen bestimmten Crashpuls, sowie die jeweilige Umgebungssituation charakterisiert sein können.

Es besteht daher ein Bedarf für ein adaptives Sicherheitsgurtsystem, bei dem die von dem Gurtband auf den Fahrzeuginsassen aufgebrachte Krafteinwirkung und die Bewegung des Fahrzeuginsassen im Crashfall in Abhängigkeit spezifischer insassen-, fahrzeugspezifischer und situationsabhängiger Parameter zur Crashzeit individuell gesteuert werden kann.

Der Erfindung liegt die Aufgabe zugrunde, einen zum Einsatz in einem derartigen adaptiven Sicherheitsgurtsystem geeigneten, kompakt aufgebauten Gurtaufroller anzugeben.

Zur Lösung dieser Aufgabe weist der erfindungsgemäße Gurtaufroller eine drehbare Gurtrolle, ein mit der Gurtrolle drehfest verbindbares Drehglied und einen Aktuator auf. Das Drehglied kann beispielsweise dauerhaft drehfest mit einer Welle der Gurtrolle verbunden sein, so dass sich das Drehglied stets mit der Gurtrolle um eine gemeinsame Drehachse dreht. Alternativ dazu ist es jedoch auch möglich, einen geeigneten Mechanismus, beispielsweise einen Klinkenmechanismus, vorzusehen, der das Drehglied nur bei Bedarf, das heißt dann, wenn eine Abbremsung einer Drehbewegung der Gurtrolle gewünscht ist, drehfest mit der Gurtrolle verbindet. Schließlich kann das Drehglied auch integriert mit der Gurtrolle ausgebildet sein und beispielsweise als Seitenwand der Gurtrolle dienen. Der Aktuator des erfindungsgemäßen Gurtaufrollers erzeugt eine Betätigungskraft und wirkt auf mindestens ein Reibelement, um das Reibelement zur Abbremsung einer Drehbewegung der Gurtrolle mit dem drehfest mit der Gurtrolle verbindbaren Drehglied in Eingriff zu bringen. Indem der Aktuator über das Reibelement und das Drehglied eine Bremskraft auf die Gurtrolle aufbringt, wird das Abwickeln eines auf die Gurtrolle gewickelten Gurtbands von der Gurtrolle unterbunden. Zwischen dem Aktuator und dem Drehglied ist eine Anordnung zur Selbstverstärkung der von dem Aktuator erzeugten Betätigungskraft angeordnet. Durch eine derartige Selbstverstärkungsanordnung kann die von dem Aktuator zur Erzielung einer gewünschten Bremswirkung aufzubringende Betätigungskraft signifikant verringert werden. Dadurch kann ein kompakt aufgebauter, leichtgewichtiger Aktuator zum Einsatz kommen. Der erfindungsgemäße Gurtaufroller weist somit ein ausreichend kleines Volumen auf, um in dem in modernen Kraftfahrzeugen üblicherweise nur sehr begrenzt zur Verfügung stehenden Einbauraum, beispielsweise in der B-Säule oder der C-Säule des Kraftfahrzeugs, untergebracht werden zu können.

Der Aktuator des erfindungsgemäßen Gurtaufrollers ist vorzugsweise mit einer elektronischen Steuereinheit verbunden, die dazu eingerichtet ist, den Aktuator in Abhängigkeit insassenspezifischer, fahrzeugspezifischer und/oder situationsspezifischer Parameter zu steuern und/oder zu regeln, um eine entsprechende Abbremsung der Drehbewegung der Gurtrolle zu bewirken. Die insassenspezifischen, fahrzeugspezifischen und/oder situationsspezifischen Parameter können mit Hilfe entsprechender Sensoren, wie z. B. Crashsensoren, Abstands- und Kontaktsensoren, Radarsensoren, Umfelderkennungssensoren, Sitzpositions- und Sitzstellungserkennungssensoren, Beschleunigungssensoren, Fliehkraftsensoren, Sensoren zur Erfassung des Insassengewichts und/oder der Insassenposition, etc. ermittelt werden. Dabei kann selbstverständlich auf ohnehin in einem Kraftfahrzeug vorhandene, beispielsweise zur Steuerung des Bremssystems dienende Sensoren zurückgegriffen werden. Diese Sensoren können beispielsweise über ein Bussystem, mit der elektronischen Steuereinheit verbunden werden. Indem der Aktuator in Abhängigkeit insassenspezifischer, fahrzeugspezifischer und/oder situationsspezifischer Parameter gesteuert wird, erfolgt die Abbremsung der Drehbewegung der Gurtrolle und somit der Abwickelbewegung des Gurtbands von der Gurtrolle ebenfalls in Abhängigkeit dieser Parameter. Dadurch wird eine individuelle Anpassung der über das Gurtband auf einen Fahrzeuginsassen einwirkende Kraft an die von den Sensoren ermittelten insassenspezifischen, fahrzeugspezifischen und/oder situationsspezifischen Parameter ermöglicht. Ein mit dem erfindungsgemäßen Gurtaufroller ausgestattetes Sicherheitsgurtsystem gewährleistet somit im Vergleich zu konventionellen Systemen eine verbesserte passive Sicherheit.

Bei einer bevorzugten Ausführungsform des erfindungsgemäßen Gurtaufrollers umfasst die Selbstverstärkungsanordnung ein erstes und ein zweites Trägerteil. Das erste Trägerteil trägt mindestens ein erstes Kraftverstärkungselement und das zweite Trägerteil trägt mindestens ein zweites Kraftverstärkungselement. Das erste und das zweite Trägerteil sind vorzugsweise infolge der von dem Aktuator erzeugten Betätigungskraft relativ zueinander verdrehbar. Mit anderen Worten, der Aktuator wirkt derart mit der Selbstverstärkungsanordnung zusammen, dass die von ihm erzeugte Betätigungskraft eine Verdrehung des ersten und des zweiten Trägerteils relativ zueinander bewirkt. Vorzugsweise ist eine Mehrzahl von ersten und zweiten Kraftverstärkungselementen vorhanden, die rotationssymmetrisch um die Drehachse des ersten und/oder des zweiten Trägerteils angeordnet sind. Das erste und/oder das zweite Trägerteil kann/können um die Drehachse des Drehglieds verdrehbar sein. Wenn das Drehglied, wie oben beschrieben, drehfest mit einer Welle der Gurtrolle verbunden ist, sind die Gurtrolle, das Drehglied sowie das erste und/oder das zweite Trägerteil somit vorzugsweise koaxial zueinander angeordnet.

Das erste Kraftverstärkungselement kann beispielsweise in Form eines keilförmigen Bauteils ausgebildet sein und umfasst vorzugsweise eine schräge Keilfläche mit einem Keilsteigungswinkel $\alpha$, die sich gleitend oder rollend an dem zweiten Kraftverstärkungselement abstützt. Beispielsweise ist das erste Kraftverstärkungselement an dem ersten Trägerteil angebracht. Die schräge Keilfläche kann jedoch auch unmittelbar an dem ersten Trägerteil oder an einem mit dem ersten Trägerteil verbundenen, selbst jedoch nicht keilförmig gestalteten Bauteil ausgebildet sein. Das zweite Kraftverstärkungselement kann zur Abstützung der schrägen Keilfläche des ersten Kraftverstärkungselements ebenfalls eine der Keilfläche des ersten Kraftverstärkungselements gegenüberliegende schräge Keilfläche oder einen Bolzen umfassen.

Alternativ dazu können das erste und das zweite Kraftverstärkungselement auch eine Kugel/Rampen-Anordnung bilden. Bei einer derartigen Kugel/Rampen-Anordnung wird die schräge Keilfläche des ersten Kraftverstärkungselements vorzugsweise durch eine geneigte Fläche mit einem Keilsteigungswinkel $\alpha$ gebildet, die an dem ersten Trägerteil oder einem mit dem ersten Trägerteil verbundenen Bauteil vorgesehen ist. Die schräge Keilfläche bildet eine Bahn zur Führung einer Kugel oder einer Walze, so dass sich die schräge Keilfläche rollend an der das zweite Kraftverstärkungselement bildenden Kugel oder Walze abstützt. Vorzugsweise weist die Kugel/Rampen-Anordnung eine Mehrzahl von schrägen Keilflächen auf, die zur Bildung eines oder mehrerer Kugelringe rotationssymmetrisch um die Drehachse des ersten Trägerteils an dem ersten Trägerteil oder dem mit dem ersten Trägerteil verbundenem Bauteil angelegt sind. Bei einer derartigen rotationssymmetrischen Anordnung kommen sinnvollerweise entweder Kugeln oder kegelförmige ausgebildete Walzen als zweite Kraftverstärkungselemente zum Einsatz.

Wenn das erste und das zweite Trägerteil infolge der von dem Aktuator erzeugten Betätigungskraft relativ zueinander verdreht werden, läuft die schräge Keilfläche des ersten Kraftverstärkungselements beispielsweise auf eine der schrägen Keilfläche des ersten Kraftverstärkungselements gegenüberliegende schräge Keilfläche des zweiten Kraftverstärkungselements auf. Dadurch wird eine von dem Keilsteigungswinkel $\alpha$ der schrägen Keilfläche des ersten Kraftverstärkungselements abhängige Selbstverstärkungswirkung erzielt.

Bei einer weiteren alternativen Ausführungsform des erfindungsgemäßen Gurtaufrollers ist das erste Kraftverstärkungselement in Form eines an dem ersten Trägerteil vorgesehenen Gewindes ausgebildet. Das zweite Kraftverstärkungselement ist vorzugsweise eine mit dem an dem ersten Trägerteil vorgesehenen Gewinde zusammenwirkende Spindel. Die Spindel kann beispielsweise hohlzylindrisch ausgebildet sein und von der Welle der Gurtrolle durchsetzt werden. Wenn das erste und das zweite Trägerteil relativ zueinander verdreht werden, wird durch das Zusammenwirken des an dem ersten Trägerteil vorgesehenen Gewindes mit der Spindel eine von einer Spindelsteigung abhängige Selbstverstärkungswirkung erzielt.

Der Keilsteigungswinkel $\alpha$ oder die Spindelsteigung kann derart festgelegt sein, dass eine mittels des Aktuators in die Selbstverstärkungsanordnung eingeleitete Eingangskraft unabhängig von einem sich ändernden Reibwert zwischen dem mindestens einen Reibelement und dem Drehglied, bezogen auf die Drehrichtung des Drehglieds, stets positiv ist. Man spricht in diesem Zusammenhang von einer Druckanordnung, da das Maß der Selbstverstärkung durch die Wahl des Keilsteigungswinkels $\alpha$ bzw. der Spindelsteigung nur so groß bemessen ist, dass unabhängig von dem sich ändernden Reibwert in allen Betriebszuständen der Anordnung eine Druckkraft auf die schräge Keilfläche bzw. die Spindel ausgeübt werden muss, um eine gewünschte Reibkraft zu erzielen. Die Druckkraft wird dabei von dem Aktuator aufgebracht.

Alternativ dazu kann der Keilsteigungswinkel $\alpha$ oder die Spindelsteigung jedoch auch derart gewählt sein, dass die mittels des Aktuators in die Selbstverstärkungsanordnung eingeleitete Eingangskraft unabhängig von dem sich ändernden Reibwert zwischen dem mindestens einen Reibelement und dem Drehglied, wiederum bezogen auf die Drehrichtung des Drehglieds, stets negativ ist. Im Gegensatz zu der oben erläuterten Druckanordnung spricht man bei einer stets negativen Eingangskraft von einer Zuganordnung, das heißt in jedem Betriebszustand der Anordnung muss eine Zugkraft auf die schräge Keilfläche bzw. die Spindel ausgeübt werden, um die gewünschte Reibkraft zu erzielen. Eine derartige Zuganordnung kann durch die Wahl eines gegenüber einer Druckanordnung kleineren Keilsteigungswinkels $\alpha$ bzw. einer gegenüber einer Druckanordnung kleineren Spindelsteigung realisiert werden.

Bei einer besonders bevorzugten Ausführungsform des erfindungsgemäßen Gurtaufrollers ist der Keilsteigungswinkel $\alpha$ bzw. die Spindelsteigung jedoch so gewählt, dass sich die durch das erste und das zweite Kraftverstärkungselement gebildete Anordnung in einem optimalen (üblicherweise dem am häufigsten auftretenden) Betriebszustand in der Nähe eines Übergangspunkts zwischen einer Druck- und einer Zuganordnung befindet. In der Nähe des Übergangspunkts ist die von dem Aktuator aufzubringende Eingangskraft nahe Null. Durch eine Veränderung des Reibwerts, beispielsweise in Abhängigkeit der Temperatur, stellt sich eine Druck- oder Zuganordnung ein.

Vorzugsweise ist das zweite Trägerteil ortsfest ausgebildet. Das erste Trägerteil ist dagegen vorzugsweise mit dem Aktuator verbindbar, um das erste Trägerteil relativ zu dem zweiten Trägerteil zu verdrehen. Bei einer derartigen Anordnung wird somit das erste Kraftverstärkungselement relativ zu dem zweiten Kraftverstärkungselement bewegt. Das erste Trägerteil kann unabhängig vom Betriebszustand des erfindungsgemäßen Gurtaufrollers stets unmittelbar oder mittelbar über ein Getriebe mit dem ersten Trägerteil verbunden sein. Es ist jedoch auch denkbar, einen geeigneten Mechanismus vorzusehen, der den Aktuator nur bei Bedarf, das heißt z.B. im Crashfall, unmittelbar oder mittelbar über ein Getriebe mit dem ersten Trägerteil verbindet.

Bezüglich der Ausbildung des Aktuators sind bei dem erfindungsgemäßen Gurtaufroller verschiedene Varianten denkbar. Gemäß einer ersten Ausführungsform ist der Aktuator in Form einer rotierenden elektrischen Maschine ausgebildet. Ein derartiger Aktuator kann beispielsweise mit einem Getriebe verbindbar sein. Mögliche Getriebe sind zum Beispiel Zahnrad- oder, alternativ dazu, zur Erzielung höherer Übersetzungen, Schneckengetriebe. Durch das Getriebe kann eine Drehbewegung einer beispielsweise mit einem Zahnrad oder einer Schnecke verbundenen Motorwelle beispielsweise auf das erste Trägerteil übertragen werden, um das erste Trägerteil relativ zu dem zweiten Trägerteil zu verdrehen. Das erste Trägerteil ist vorzugsweise mit einer Verzahnung, beispielsweise einer Außenverzahnung, versehen, die mit einem mit dem Aktuator verbundenen Zahnrad oder einer mit dem Aktuator verbundenen Schnecke zusammenwirkt.

Bei einer alternativen Ausführungsform des erfindungsgemäßen Gurtaufrollers ist der Aktuator in Form eines Direktantriebs ausgebildet. Unter dem Begriff Direktantrieb wird hier ein Antrieb verstanden, der ohne Zwischenschaltung des Getriebes über die Selbstverstärkungsanordnung auf das mindestens ein Reibelement wirkt. Ein derartiger Direktantrieb kann beispielsweise mittels eines Linearmotors mit einer Statorspule und einem ein magnetisches Material umfassenden Läufer realisiert werden. Vorzugsweise ist die Statorspule ringförmig um eine Drehachse des zu verdrehenden Bauteils, das heißt beispielsweise des ersten Trägerteils, angeordnet und an einem zu dem Drehglied im Wesentlichen parallelen Abschnitt des zweiten Trägerteils festgelegt. Der Läufer kann beispielsweise an dem ersten Trägerteil befestigt sein, so dass das erste Trägerteil bei einer Aktivierung des Direktantriebs ohne Zwischenschaltung eines Getriebes in eine Drehbewegung versetzt, das heißt relativ zu dem zweiten Trägerteil verdreht werden kann.

Schließlich ist es ferner möglich, den Aktuator in Form eines piezoelektrischen Antriebs auszubilden, da die von einem derartigen Antrieb erzeugten Stellkräfte durch die Selbstverstärkungsanordnung ausreichend verstärkt werden können, um die gewünschte Abbremsung der Drehbewegung der Gurtrolle zu gewährleisten. Alle bevorzugten Aktuatoren zeichnen sich durch eine gute Regelbarkeit und insbesondere eine hohe Dynamik aus. Dadurch kann die von dem jeweiligen Aktuator erzeugte Betätigungskraft im Crashfall besonders gut an die insassenspezifischen, fahrzeugspezifischen und/oder situationsspezifischen Parameter angepasst werden.

Bei einer bevorzugten Ausführungsform des erfindungsgemäßen Gurtaufrollers ist der Aktuator bezüglich der Gurtrolle radial außenliegend im Wesentlichen benachbart zu der Gurtrolle positioniert. In diesem Zusammenhang bedeutet der Ausdruck "im Wesentlichen benachbart", dass der Aktuator unmittelbar benachbart zu der Gurtrolle positioniert sein kann. Alternativ dazu können jedoch auch andere Bauteile, wie z.B. ein Gehäuseteil zur Abstützung des Aktuators zwischen der Gurtrolle und dem Aktuator angeordnet sein.

Es ist ferner möglich, den Aktuator bezüglich des Drehglieds radial außenliegend im Wesentlichen benachbart zu dem Drehglied zu positionieren. Beispielsweise kann der Aktuator an einem sich im Wesentlichen parallel zur Welle der Gurtrolle um das Drehglied erstreckenden Abschnitt des zweiten Trägerteils befestigt sein. Der Ausdruck "im Wesentlichen benachbart" bedeutet wiederum, dass der Aktuator unmittelbar benachbart zu dem Drehglied positioniert sein kann. Es können aber auch andere Bauteile, wie z.B. der oben erwähnte Abschnitt des zweiten Trägerteils zur Abstützung des Aktuators zwischen dem Drehglied und dem Aktuator vorhanden sein.

Schließlich kann der Aktuator auf einer von der Gurtrolle abgewandten Seite des Drehglieds im Wesentlichen benachbart zu dem Drehglied positioniert sein. Wie oben erläutert, soll mit der Formulierung "im Wesentlichen benachbart" zum Ausdruck gebracht werden, dass der Aktuator zwar unmittelbar benachbart zu dem Drehglied positioniert sein kann, es aber auch denkbar ist, dass weitere Bauteile zwischen dem Drehglied und dem Aktuator angeordnet sind. Durch die Variation der Position des Aktuators kann der erfindungsgemäße Gurtaufroller besonders gut an spezifische Einbauanforderungen in verschiedenen Kraftfahrzeugtypen angepasst werden.

Das erste Trägerteil ist vorzugsweise in Richtung seiner Drehachse verschiebbar gelagert. Infolgedessen wird das erste Trägerteil bei einer Betätigung des Aktuators durch eine über die ersten und zweiten Kraftverstärkungselemente in das erste Trägerteil eingeleitete, parallel zur Drehachse des ersten Trägerteils gerichtete Kraft axial in Richtung des Drehglieds verschoben. Zur Lagerung des ersten Trägerteils kann beispielsweise ein Gleitlager eingesetzt werden. Alternativ dazu kann die axiale Bewegung des ersten Trägerteils auch durch das Zusammenwirken eines an dem ersten Trägerteil ausgebildeten Gewindes mit einer ortfesten Spindel geführt werden. Das erste Trägerteil kann an einer dem Drehglied zugewandten und sich im Wesentlichen parallel zu dem Drehglied erstreckenden Fläche mindestens ein erstes Reibelement tragen. Dieses erste Reibelement wird bei einer Verschiebung des ersten Trägerteils in axialer Richtung gegen das Drehglied gedrückt und bewirkt dadurch eine Abbremsung der Drehbewegung der Gurtrolle, sobald eine drehfeste Verbindung zwischen der Gurtrolle mit dem Drehglied besteht. Es versteht sich, dass auch mehrere, beispielsweise rotationssymmetrisch um die Drehachse des Drehglieds angeordnete Reibelemente an dem ersten Trägerteil befestigt sein können.

Bei einer besonders bevorzugten Ausführungsform des erfindungsgemäßen Gurtaufrollers ist das Drehglied in Richtung seiner Drehachse verschiebbar gelagert. Beispielsweise kann eine Welle der Gurtrolle, mit der das Drehglied drehfest verbindbar ist, schwimmend gelagert sein. Bei einer derartigen Anordnung wird das Drehglied gemeinsam mit dem ersten Trägerteil in axialer Richtung verschoben, wenn das an dem ersten Trägerteil angebrachte erste Reibelement bei einer Betätigung des Aktuators gegen das Drehglied gedrückt wird.

Mindestens ein zweites Reibelement kann an einer dem Drehglied zugewandten und sich im Wesentlichen parallel zu dem Drehglied erstreckenden Fläche des zweiten Trägerteils angebracht sein. Bei einer derartigen Anordnung wird das axial verschiebbar gelagerte Drehglied bei einer Betätigung des Aktuators und der damit verbundenen axialen Verschiebung des ersten Trägerteils ebenfalls axial verschoben und gegen das mindestens eine zweite Reibelement gedrückt. Es versteht sich, dass auch mehrere zweite Reibelemente vorhanden sein können, die beispielsweise rotationssymmetrisch um die Drehachse des Drehglieds an dem zweiten Trägerteil angebracht sind.

Zur Einstellung eines Abstands zwischen dem ersten und dem zweiten Trägerteil umfasst eine bevorzugte Ausführung des erfindungsgemäßen Gurtaufrollers eine Rückstellfeder. Die Rückstellfeder weist ein erstes und ein zweites Ende auf, wobei sich die Enden der Rückstellfeder vorzugsweise an dem ersten Trägerteil bzw. dem zweiten Trägerteil abstützen.

Zur Festlegung einer Ruhestellung des axial verschiebbar gelagerten Drehglieds relativ zu den ersten und zweiten Trägerteilen kann mindestens ein Distanzelement vorhanden sein. Beispielsweise besteht ein erstes Distanzelement aus einer ersten Feder und legt einen Abstand zwischen dem ersten Trägerteil und dem Drehglied fest. Ein zweites, ebenfalls in Form einer Feder ausgebildetes Distanzelement kann zur Festlegung eines Abstands zwischen dem Drehglied und dem zweiten Trägerteil vorhanden sein.

Durch die Rückstellfeder und die Distanzelemente wird verhindert, dass das Drehglied bei nicht betätigtem Aktuator über das mindestens eine Reibelement schleift. Mit anderen Worten, die Rückstellfeder und die Distanzelemente ermöglichen die Einstellung eines gewünschten Lüftspiels zwischen dem Drehglied und dem mindestens einen Reibelement. Bei einer Betätigung des Aktuators wird das mindestens eine Distanzelement zusammengedrückt, so dass das erste Trägerteil und gegebenenfalls das Drehglied gegen die Kraft der Rückstellfeder in axialer Richtung verschoben werden können, um das mindestens eine Reibelement in Anlage an das Drehglied zu bringen.

Bei einer bevorzugten Ausführungsform des erfindungsgemäßen Gurtaufrollers umfasst die Selbstverstärkungsanordnung ein Federelement, das dazu eingerichtet ist, eine in Umfangsrichtung des ersten Trägerteils gerichtete Kraft auf das erste Trägerteil aufzubringen. Ein derartiges Federelement kann beispielsweise in Form einer Spiralfeder ausgebildet sein, deren Enden an dem ersten Trägerteil bzw. einem ortsfesten Bauteil, wie z.B. dem zweiten Trägerteil befestigt sind. Durch ein derartiges Federelement kann eine Kraft, die aus einer bei einer Betätigung des Aktuators eingeleiteten Normalkraft und einer an dem an dem Drehglied entstehenden Reibkraft resultiert, hinsichtlich ihrer Richtung und ihres Betrag variiert werden. Grundsätzlich hängt die Richtung und der Betrag der resultierenden Kraft von dem Keilsteigungswinkel $\alpha$ bzw. der Spindelsteigung und dem Reibwert des mindestens einen Reibelements ab. Um eine optimale Wirkung der Selbstverstärkungsanordnung zu erzielen, sollte die resultierende Kraft senkrecht zu der durch den Keilsteigungswinkel $\alpha$ bestimmten schrägen Keilfläche bzw. einer durch die Spindelsteigung bestimmten schrägen Spindelfläche gerichtet sein. Da durch das Federelement die Richtung sowie der Betrag der resultierenden Kraft beeinflusst werden kann, ermöglicht das Federelement eine Kompensation einer Abweichung des Keilsteigungswinkels $\alpha$ bzw. der Spindelsteigung sowie des Reibwerts des mindestens einen Reibelements von einem bezüglich der Auswirkung auf die resultierende Kraft optimalen Wert. Dadurch können bei der Herstellung des erfindungsgemäßen Gurtaufrollers für den Keilsteigungswinkel $\alpha$ bzw. die Spindelsteigung und den Reibwert des mindestens einen Reibelements höhere Toleranzen angesetzt werden.

Zusätzlich oder alternativ dazu kann das mindestens eine Reibelement aus einem magnetischen Material bestehen, um die Richtung und den Betrag der Kraft, die aus der bei einer Betätigung des Aktuators auftretenden Normalkraft und der an dem mindestens einen Reibelement entstehenden Reibkraft resultiert, hinsichtlich ihres Betrags und ihrer Richtung zu beeinflussen. Schließlich ist es ferner möglich, das erste Trägerteil zu magnetisieren und/oder einen z.B. in Form eines Topfmagneten ausgebildeten Magneten vorzusehen, um eine Veränderung des Betrags oder der Richtung der resultierenden Kraft zu bewirken. Der Magnet bringt vorzugsweise eine Magnetkraft auf das Drehglied und/oder das erste Trägerteil auf, um das Drehglied in Richtung des mindestens einen Reibelements zu drängen. Durch die Erzeugung einer Magnetkraft, die eine Verschiebung des ersten Trägerteils und/oder des Drehglieds in axialer Richtung bewirkt, kann ferner eine zusätzliche Normalkraft an dem Drehglied erzeugt werden. Diese zusätzliche Normalkraft kann im Crashfall für eine Verstärkung der Abbremswirkung sorgen und bewirkt darüber hinaus ein rasches Anspringen der Bremsanordnung. Darüber hinaus ist mit einer magnetischen Anordnung ebenso wie mit einem Federelement, das eine nicht lineare Federkennlinie aufweist, eine nicht lineare Variation der resultierenden Kraft möglich.

Verschiedene Ausführungsformen des erfindungsgemäßen Gurtaufrollers werden nun anhand der beigefügten, schematischen Zeichnungen näher erläutert, von denen

Figur 1       einen Abschnitt einer ersten Ausführungsform des erfindungsgemäßen Gurtaufrollers im Längsschnitt zeigt,

Figur 2       eine Draufsicht einer Keilanordnung zeigt, die in der in Figur 1 dargestellten ersten Ausführungsform des erfindungsgemäßen Gurtaufrollers zum Einsatz kommt,

Figur 3       das Kräftegleichgewicht an einem ersten Keil der in Figur 2 dargestellten Keilanordnung zeigt,

Figur 4       einen Abschnitt einer mit einer Aufnahme für die Keilanordnung ausgestatteten zweiten Ausführungsform des erfindungsgemäßen Gurtaufrollers im Längsschnitt zeigt,

Figur 5       einen Abschnitt einer mit einem Schneckengetriebe ausgestatteten dritten Ausführungsform des erfindungsgemäßen Gurtaufrollers im Längsschnitt zeigt,

Figur 6       eine Draufsicht der interessierenden Komponenten des Schneckengetriebes der in Figur 5 dargestellten dritten Ausführungsform des erfindungsgemäßen Gurtaufrollers zeigt,

Figur 7       einen Abschnitt einer mit einer alternativen Keilanordnung ausgestatteten vierten Ausführungsform des erfindungsgemäßen Gurtaufrollers im Längsschnitt zeigt,

Figur 8       einen Abschnitt der vierten Ausführungsform des erfindungsgemäßen Gurtaufrollers gemäß Figur 7 in einer räumlichen Darstellung zeigt,

Figur 9       einen Abschnitt einer Variante der in Figur 7 dargestellten vierten Ausführungsform des erfindungsgemäßen Gurtaufrollers im Längsschnitt zeigt,

Figur 10a-c   verschiedene Ausführungsformen einer Anordnung zur Festlegung einer Ruhestellung einer Bremsscheibe des erfindungsgemäßen Gurtaufrollers relativ zu einem ersten Trägerteil zeigt,

Figur 11 einen Abschnitt einer fünften Ausführungsform des erfindungsgemäßen Gurtaufrollers im Längsschnitt zeigt,

Figur 12 einen Abschnitt einer mit einer weiteren alternativen Keilanordnung ausgestatteten sechsten Ausführungsform des erfindungsgemäßen Gurtaufrollers im Längsschnitt zeigt,

Figur 13 einen Abschnitt der sechsten Ausführungsform des erfindungsgemäßen Gurtaufrollers gemäß Figur 12 in einer räumlichen Darstellung zeigt,

Figur 14 einen Abschnitt einer siebten Ausführungsform des erfindungsgemäßen Gurtaufrollers im Längsschnitt zeigt,

Figur 15 einen Abschnitt einer achten Ausführungsform des erfindungsgemäßen Gurtaufrollers im Längsschnitt zeigt, bei der ein Aktuator auf einer von der Gurtrolle abgewandten Seite der Bremsscheibe positioniert ist,

Figur 16 einen Abschnitt einer mit einem Direktantrieb ausgestatteten neunten Ausführungsform des erfindungsgemäßen Gurtaufrollers im Längsschnitt zeigt,

Figur 17 einen Abschnitt einer ebenfalls mit einem Direktantrieb ausgestatteten zehnten Ausführungsform des erfindungsgemäßen Gurtaufrollers im Längsschnitt zeigt,

Figur 18 einen Abschnitt einer mit einer Spindelanordnung ausgestatteten elften Ausführungsform des erfindungsgemäßen Gurtaufrollers im Längsschnitt zeigt,

Figur 19 einen Abschnitt einer mit einer Kugel/Rampen-Anordnung ausgestatteten zwölften Ausführungsform des erfindungsgemäßen Gurtaufrollers im Längsschnitt zeigt, und

Figur 20 einen Abschnitt einer mit einer Spiralfeder ausgestatteten dreizehnten Ausführungsform des erfindungsgemäßen Gurtaufrollers im Längsschnitt zeigt.

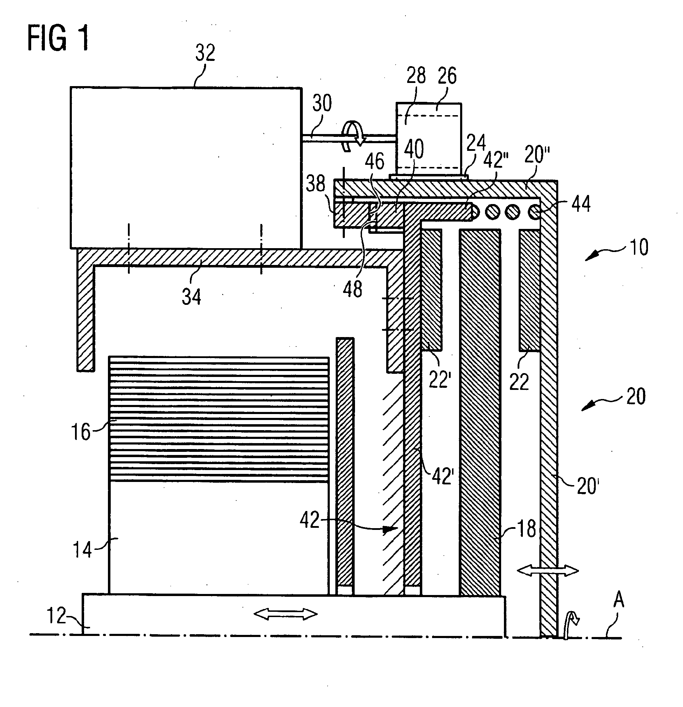

Figur 1 zeigt eine erste Ausführungsform eines Gurtaufrollers 10, wobei in Figur 1 lediglich ein auf einer Seite einer Drehachse A liegender Abschnitt des Gurtaufrollers 10 im Längsschnitt dargestellt ist. Der Gurtaufroller 10 umfasst eine drehfest auf einer schwimmend gelagerten Welle 12 angeordnete Gurtrolle 14, auf die ein Gurtband 16 gewickelt ist. Zum Auf- bzw. Abwickeln des Gurtbands 16 auf bzw. von der Gurtrolle 14 ist die Welle 12 mit der Gurtrolle 14 um die Drehachse A drehbar. Eine Bremsscheibe 18 ist koaxial zu der Gurtrolle 14 drehfest auf der Welle 12 angeordnet und somit gemeinsam mit der Gurtrolle 14 um die Drehachse A drehbar.

Ein erstes Trägerteil 20 weist einen ersten Abschnitt 20' auf, der sich im Wesentlichen parallel zur Bremsscheibe 18 erstreckt und auf seiner der Bremsscheibe 18 zugewandten Seite ein erstes Reibelement 22 trägt. Ein zweiter Abschnitt 20" des ersten Trägerteils 20 erstreckt sich im Wesentlichen senkrecht zu dem ersten Abschnitt 20' um den Außenumfang der Bremsscheibe 18. Das erste Trägerteil 20 ist mittels eines in Figur 1 nicht gezeigten Lagers entlang der Drehachse A verschiebbar und um die Drehachse A drehbar gelagert.

An seinem Außenumfang ist der zweite Abschnitt 20" des ersten Trägerteils 20 mit einer Außenverzahnung 24 versehen, die mit einer Außenverzahnung 26 eines Zahnrads 28 zusammenwirkt. Das Zahnrad 28 ist drehfest mit einer Motorwelle 30 eines Elektromotors 32 verbunden, wobei der Elektromotor 32 bezüglich der Gurtrolle 14 radial außenliegend positioniert und an einem die Gurtrolle 14 übergreifenden ortsfesten Gehäuseteil 34 befestigt ist.

Zur Steuerung des Elektromotors 32 ist eine in Figur 1 nicht gezeigte elektronische Steuereinheit vorhanden. Die elektronische Steuereinheit steht mit ebenfalls nicht dargestellten Sensoren zur Erfassung insassenspezifischer, fahrzeugspezifischen und/oder situationsspezifischer Parameter, wie z.B. Crashsensoren, Beschleunigungssensoren, Fliehkraftsensoren, Sensoren zur Erfassung des Insassengewichts und/oder der Insassenposition etc. in Verbindung.

Eine Mehrzahl von ersten Keilen 38 ist um einen Innenumfang des zweiten Abschnitts 20" des ersten Trägerteils 20 verteilt an dem zweiten Abschnitt 20" des ersten Trägerteils 20 befestigt. Eine der Anzahl erster Keile 38 entsprechende Anzahl zweiter Keile 40 ist an einer von der Bremsscheibe 18 abgewandten Außenfläche eines ortsfesten und mit dem Gehäuseteil 34 verbundenen zweiten Trägerteils 42 befestigt. Die ersten und zweiten Keile 38, 40 sind dabei so orientiert, dass sich ihre schrägen Keilflächen 46, 48 gegenüberliegen und im Wesentlichen senkrecht zu der Drehachse A erstrecken.

Auf seiner der Bremsscheibe 18 zugewandten Seite trägt ein erster Abschnitt 42' des zweiten Trägerteils 42, der sich im Wesentlichen parallel zur Bremsscheibe 18 erstreckt, ein zweites Reibelement 22'. Zur Einstellung eines Abstands zwischen dem ersten Abschnitt 20' des ersten Trägerteils 20 und dem ersten Abschnitt 42' des zweiten Trägerteils 42 ist eine Rückstellfeder 44 vorgesehen, deren Enden sich an dem ersten Abschnitt 20' des ersten Trägerteils 20 bzw. einem sich im Wesentlichen senkrecht zu dem ersten Abschnitt 42' erstreckenden zweiten Abschnitt 42" des zweiten Trägerteils 42 abstützen.

Der zum Einsatz in einem Kraftfahrzeug vorgesehene Gurtaufroller 10 weist schließlich einen in Figur 1 ebenfalls nicht gezeigten Gurtstraffer auf, der das Gurtband 16 zur Kompensation der Gurtlose am Körper eines Fahrzeuginsassen straff zieht, wenn ein Fahrassistenzsystem und/oder entsprechende Sensoren eine Gefahrensituation oder einen unmittelbar bevorstehenden Crash erfassen. Die zur Ansteuerung des Elektromotors 32 eingesetzte elektronische Steuereinheit kann auch zur Ansteuerung des Gurtstraffers eingesetzt werden. Alternativ dazu ist es jedoch auch möglich, den Gurtstraffer mittels einer separaten elektronischen Steuereinheit anzusteuern. Als Betätigungsmechanismen für den Gurtstraffer kommen mechanische Systeme mit einer vorgespannten Feder oder pyrotechnische Systeme, bei denen das Straffziehen des Gurts mittels einer pyrotechnischen Treibladung bewirkt wird, in Frage. Alternativ dazu kann auch ein hochdynamischer Elektromotor zur Betätigung des Gurtstraffers verwendet werden, wobei hier entweder der Elektromotor 32 oder ein zusätzlicher Elektromotor zum Einsatz kommen kann.

Im Folgenden wird die Funktion des Gurtaufrollers 10 erläutert. Im Normalbetrieb des Gurtaufrollers 10 wird das Gurtband 16 durch Drehen der Welle 12 und der drehfest damit verbundenen Gurtrolle 14 um die Drehachse A auf die Gurtrolle 14 auf- bzw. von der Gurtrolle 14 abgewickelt. Die Bremsscheibe 18, die ebenfalls drehfest auf der Welle 12 angeordnet ist, wird bei einer Drehung der Welle 12 ebenfalls um die Drehachse A gedreht.

Wenn das Fahrassistenzsystem oder ein entsprechender Sensor, wie z.B. ein Crashsensor, eine Gefahrensituation oder einen unmittelbar bevorstehenden Crash erkennt, steuert die elektronische Steuereinheit den Gurtstraffer an, woraufhin der Betätigungsmechanismus des Gurtstraffers eine Drehung der Welle 12 und somit der Gurtrolle 14 und der Bremsscheibe 18 um die Drehachse A bewirkt. Dadurch wird das Gurtband 16 auf die Gurtrolle 14 gewickelt und das Gurtband 16 am Körper des Fahrzeuginsassen straffgezogen.

Beim Crash selbst wird zunächst die durch den Gurtstraffer bewirkte Drehbewegung der Welle 12, der Gurtrolle 14 und der Bremsscheibe 18 infolge der auf das Gurtband 16 wirkenden Kraft gestoppt. Um eine Drehung der Welle 12, der Gurtrolle 14 und der Bremsscheibe 18 in entgegengesetzter Richtung und somit ein Abwickeln des Gurtbands 16 von der Gurtrolle 14 zu verhindern, wird der Elektromotor 32 von der elektronischen Steuereinheit betätigt, so dass eine Drehung der Motorwelle 30 im Uhrzeigersinn über das Zahnrad 28 auf das erste Trägerteil 20 übertragen wird. Das erste Trägerteil 20 wird somit im Uhrzeigersinn um die Drehachse A relativ zu dem zweiten Trägerteil 42 verdreht. Dies führt dazu, dass die schrägen Keilflächen 46 der an dem zweiten Abschnitt 20" des ersten Trägerteils 20 befestigten ersten Keile 38 auf die schrägen Keilflächen 48 der an dem zweiten Trägerteil 42 festgelegten zweiten Keile 40 auflaufen, wodurch das erste Trägerteil 20 entgegen der Kraft der Rückstellfeder 44 axial zur Bremsscheibe 18 hin, das heißt in Figur 1 nach links verschoben wird, so dass sich das erste Reibelement 22 an die Bremsscheibe 18 anlegt.

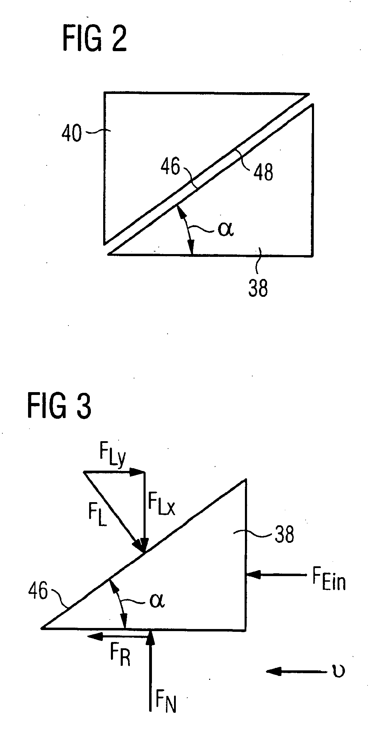

Zur besseren Veranschaulichung der Wirkung der ersten und zweiten Keile 38, 40 ist in Figur 2 eine Draufsicht einer Keilanordnung mit einem ersten und einem zweiten Keil 38, 40 dargestellt. Die ersten und die zweiten Keile 38, 40 sind so angeordnet, dass die schräge Keilfläche 46 des ersten Keils 38 der schrägen Keilfläche 48 des zweiten Keils 40 gegenüber liegt. Eine Steigung P der Keilflächen 46, 48 wird jeweils durch einen Keilsteigungswinkel $\alpha$ festgelegt. Eine durch das Zusammenwirken der ersten und zweiten Keile 38, 40 bewirkte Axialverschiebung s des ersten Trägerteils 20 bestimmt sich somit nach der Formel

$$s = P \cdot \varphi / (2 \cdot \pi)$$

wobei $\varphi$ der Drehwinkel des ersten Trägerteils 20 um die Drehachse A ist.

Obwohl die in Figur 2 gezeigte Keilanordnung einen ersten und einen zweiten Keil 38, 40 umfasst, kann der zweite Keil 40 auch durch eine andere geeignete Vorrichtung, wie z.B. einen Bolzen ersetzt werden, die eine gleitende oder rollende Abstützung des ersten Keils 38 ermöglicht. Darüber hinaus kann anstelle der in Figur 2 dargestellten Keilanordnung, wie später noch näher erläutert werden wird, auch eine Kugel/Rampen-Anordnung zum Einsatz kommen.

Wenn sich das erste Reibelement 22 an die Bremsscheibe 18 anlegt, wird die Bremsscheibe 18 aufgrund der schwimmenden Lagerung der Welle 12 gemeinsam mit dem ersten Trägerteil 20 in Richtung des zweiten Trägerteils 42, das heißt in Figur 1 nach links verschoben, so dass sich die Bremsscheibe 18 nahezu ohne Verzögerung auch an das zweite Reibelement 22' anlegt.

Bei dem in Figur 1 gezeigten Gurtaufroller 10 bilden das erste Trägerteil 20, das zweite Trägerteil 42 sowie die ersten und zweiten Keile 38, 40 eine Selbstverstärkungsanordnung, das heißt die von dem Elektromotor 32 über das Zahnrad 28 eingeleitete Betätigungskraft wird selbsttätig, ohne weitere von außen einzubringende Kräfte verstärkt. Zur Erläuterung dieser selbstverstärkenden Wirkung ist in Figur 3 das sich bei einer Betätigung des Elektromotors 32 ergebende Kräftegleichgewicht an einem ersten Keil 38 dargestellt. Dabei ist $F_{Ein}$ die über den Elektromotor 32 in den ersten Keil 38 eingeleitete Eingangskraft und $F_L$ die sich bei einem Auflaufen der schrägen Keilfläche 46 des ersten Keils 38 auf die schräge Keilfläche 48 des zweiten Keils 40 ergebende und von der schrägen Keilfläche 48 des zweiten Keils 40 abzustützende Auflagerkraft, die sich in eine der Eingangskraft $F_{Ein}$ entgegengesetzte Kraft $F_{Ly}$ und eine senkrecht zur Bremsscheibe 18 stehende Druckkraft $F_{Lx}$ aufteilen lässt. $F_N$ ist die der Kraft $F_{Lx}$ entgegengesetzte Normalkraft an der Bremsscheibe 18 und $F_R$ die an dem ersten Keil 38 bzw. an den Reibelementen 22, 22' entstehende Reibkraft.

Gemäß diesem Kräftegleichgewicht hängt die Reibkraft $F_R$, die sich bei einer mit einer Geschwindigkeit v erfolgenden Relativbewegung zwischen der Bremsscheibe 18 und dem ersten bzw. zweiten Reibelement 22, 22' ergibt, bzw. das Reibmoment an der Seite der Bremsscheibe 18, an der sich die Selbstverstärkungsanordnung befindet, entsprechend der Gleichung

$$F_{Ein} = - F_R \cdot [1 - (\tan\alpha/\mu)]$$

lediglich von dem Keilsteigungswinkel $\alpha$, einem Reibwert $\mu$ zwischen den ersten und zweiten Reibelementen 22, 22' und der Bremsscheibe 18 sowie der Eingangskraft $F_{Ein}$ ab.

Grundsätzlich kann der Keilsteigungswinkel $\alpha$ so gewählt sein, dass die von dem Elektromotor 32 eingeleitete Eingangskraft $F_{Ein}$ unabhängig von dem sich gegebenenfalls infolge äußerer Einflüsse, wie z.B. der Temperatur, ändernden Reibwert $\mu$, bezogen auf die Drehrichtung der Bremsscheibe 18, stets positiv ist (Druckkeilanordnung). Alternativ dazu kann der Keilsteigungswinkel $\alpha$ jedoch auch so gewählt sein, dass die mittels des Elektromotors 32 eingeleitete Eingangskraft $F_{Ein}$ unabhängig von dem Reibwert $\mu$, wiederum bezogen auf die Drehrichtung der Bremsscheibe 18, stets negativ ist (Zugkeilanordnung). Schließlich kann der Keilsteigungswinkel $\alpha$ auch so gewählt sein, dass sich der erste und der zweite Keil 38, 40 in einem optimalen (üblicherweise dem am häufigsten auftretenden) Betriebszustand in der Nähe eines Übergangspunkts zwischen einer Druck- und einer Zuganordnung befindet.

Die von dem Elektromotor 32 eingeleitete Eingangskraft $F_{Ein}$ wird von der elektronischen Steuereinheit so gesteuert, dass an der Bremsscheibe 18 eine gewünschte Reibkraft $F_R$ entsteht und eine entsprechende Abbremsung der Drehbewegung der Welle 12 und somit der Gurtrolle 14 bewirkt wird. Zur Ermittlung eines Sollwerts für die Reibkraft $F_R$ werden die von den entsprechenden Sensoren erfassten insassenspezifischen, fahrzeugspezifischen und/oder situationsspezifischen Parameter herangezogen. Dadurch erfolgt die Abbremsung der Drehbewegung der Gurtrolle 14 und somit der Abwickelbewegung des Gurtbands 16 von der Gurtrolle 14 ebenfalls in Abhängigkeit dieser Parameter. Mit anderen Worten, durch eine entsprechende Steuerung der von dem Elektromotor 32 aufgebrachten Eingangskraft $F_{Ein}$ in Abhängigkeit der insassenspezifischen, fahrzeugspezifischen und/oder situationsspezifischen Parameter wird eine individuelle Anpassung der über das Gurtband 16 auf einen Fahrzeuginsassen einwirkenden Kraft an diese insassenspezifischen, fahrzeugspezifischen und/oder situationsspezifischen Parameter ermöglicht. Dabei ist die elektronische Steuereinheit dazu eingerichtet, je nach Bedarf, sowohl den Betrag der Eingangskraft $F_{Ein}$ als auch einen Kraftverlauf, wie z.B. einen zeitabhängigen Verlauf der Eingangskraft $F_{Ein}$, zu steuern.

Wie aus der obigen Gleichung hervorgeht, hängt die aus der Eingangskraft $F_{Ein}$ resultierende Reibkraft $F_R$ vom Reibwert $\mu$ ab, der sich in Abhängigkeit der auf die ersten und zweiten Reibelemente 22, 22' wirkenden Last sowie in Abhängigkeit von äußeren Einflüssen, wie z.B. der Temperatur, unter Umständen relativ stark ändern kann. Um eine durch eine Reibwertänderung hervorgerufene unerwünschte Änderung der Reibkraft $F_R$ auszuregeln, kann der in Figur 1 gezeigte Gurtaufroller 10 einen Sensor umfassen, der eine ständige Messung der Reibkraft $F_R$ ermöglicht. Die elektronische Steuereinheit wertet die von diesem Sensor ermittelten Signale aus und nimmt beispielsweise auf der Grundlage eines Vergleichs zwischen dem Sollwert der Reibkraft $F_R$ und dem von dem Sensor ermittelten Istwert eine entsprechende Anpassung der über den Elektromotor 32 eingeleiteten Eingangskraft $F_{Ein}$ vor, um den Istwert der Reibkraft $F_R$ an den gewünschten Sollwert heranzuführen.

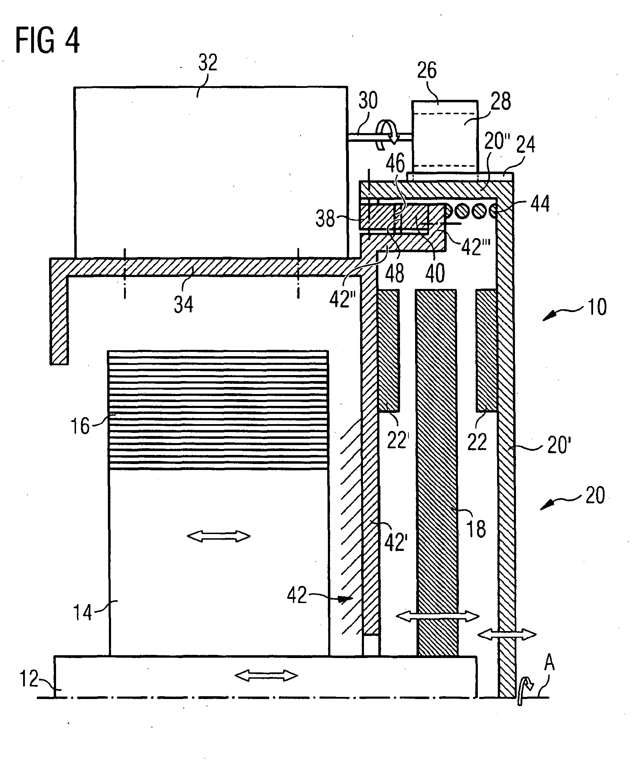

Eine in Figur 4 gezeigte zweite Ausführungsform eines Gurtaufrollers 10 unterscheidet sich von der in Figur 1 dargestellten Anordnung durch den Aufbau des zweiten Trägerteils 42. Gemäß Figur 4 umfasst ein zweites Trägerteil 42 einen im Wesentlichen parallel zu einer Bremsscheibe 18 ausgerichteten ersten Abschnitt 42' sowie einen sich im Wesentlichen senkrecht zu dem ersten Abschnitt 42' erstreckenden zweiten Abschnitt 42". Schließlich ist ein dritter Abschnitt 42''' vorhanden, der mit dem zweiten Abschnitt 42" verbunden und, wie der erste Abschnitt 42', wiederum im Wesentlichen parallel zur Bremsscheibe 18 ausgerichtet ist. Der zweite und der dritte Abschnitt 42", 42''' des zweiten Trägerteils 42 bilden somit eine im Wesentlichen L-förmige Aufnahme für einen ersten und einen zweiten Keil 38, 40, so dass die Keilanordnung besonders gut vor Umgebungseinflüssen geschützt ist.

Enden einer Rückstellfeder 44 zur Einstellung eines Abstands zwischen dem ersten und dem zweiten Trägerteil 20, 42 stützen sich bei dem in Figur 4 dargestellten Gurtaufroller 10 an einer der Bremsscheibe 18 zugewandten Fläche des ersten Abschnitts 20' des ersten Trägerteils 20 bzw. einer gegenüberliegenden Fläche des dritten Abschnitts 42'''

EP 1 919 742 B1

des zweiten Trägerteils 42 ab.

Im Übrigen entsprechen der Aufbau und die Funktionsweise des in Figur 4 gezeigten Gurtaufrollers 10 dem Aufbau und der Funktionsweise der in Figur 1 dargestellten Anordnung.

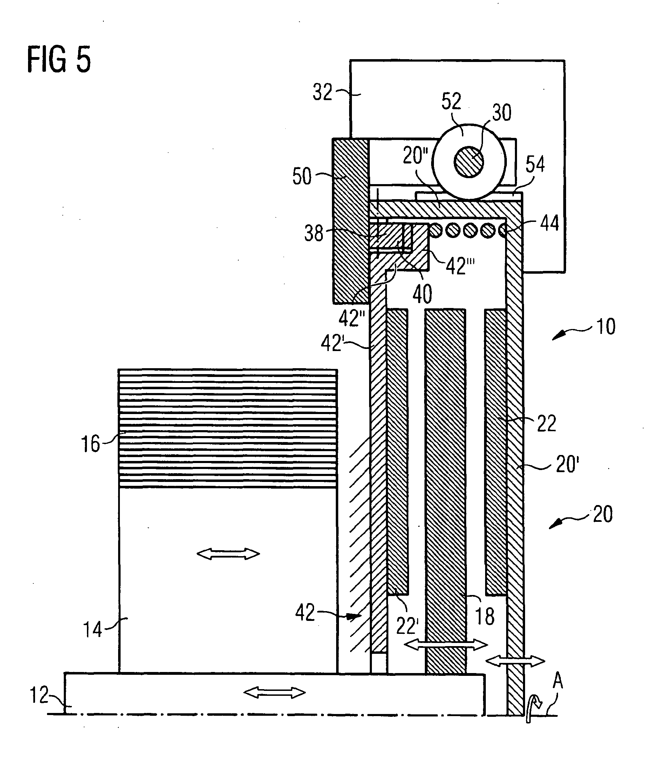

In Figur 5 ist eine dritte Ausführungsform eines Gurtaufrollers 10 gezeigt. Der in Figur 5 dargestellte Gurtaufroller 10 unterscheidet sich von der Anordnung gemäß Figur 4 zunächst dadurch, dass ein Elektromotor 32 nicht länger bezüglich einer Gurtrolle 14 radial außenliegend positioniert, sondern um 90° verschwenkt und somit axial versetzt zu der Gurtrolle 14 und bezüglich eines ersten Trägerteils 20 radial außenliegend angeordnet ist. Auf ein in den Figuren 1 und 4 gezeigtes Gehäuseteil 34 kann bei dem in Figur 5 dargestellten Gurtaufroller 10 verzichtet werden.

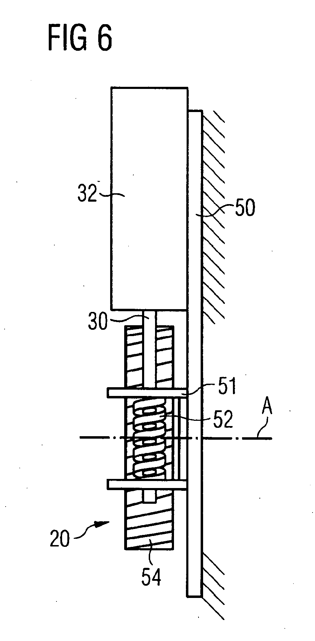

Zur Übertragung einer Drehbewegung einer Motorwelle 30 auf das erste Trägerteil 20 ist die Motorwelle 30 mit einer in einer Halterung 51 gelagerten Schnecke 52 verbunden. Wie am besten in Figur 6 zu erkennen ist, wirkt die Schnecke 52 mit einer entsprechenden Außenverzahnung 54 zusammen, die am Außenumfang eines zweiten Abschnitts 20" des ersten Trägerteils 20 ausgebildet ist. Im Vergleich zu dem in den Figuren 1 und 4 gezeigten Zahnradgetriebe sind mit einem derartigen Schneckengetriebe höhere Übersetzungen erzielbar.

Im Übrigen entsprechen der Aufbau und die Funktionsweise des in Figur 5 gezeigten Gurtaufrollers 10 dem Aufbau und der Funktionsweise der in Figur 4 gezeigten Anordnung.

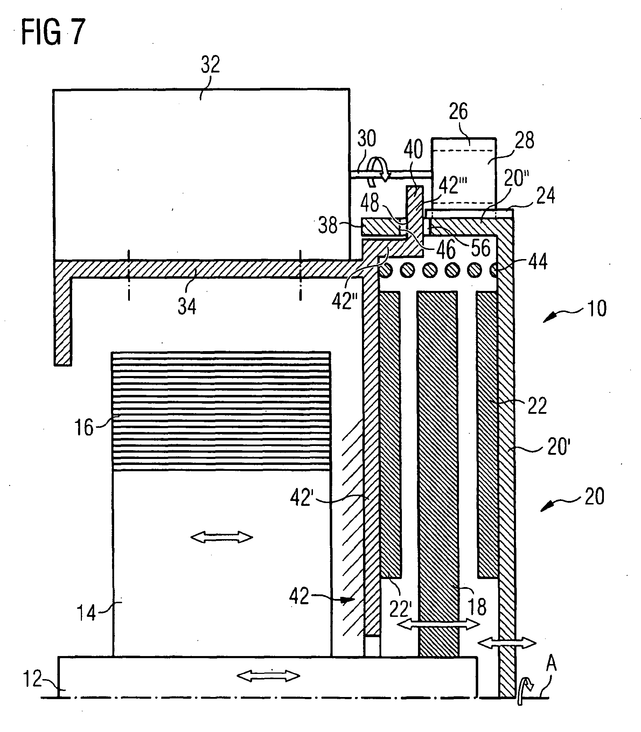

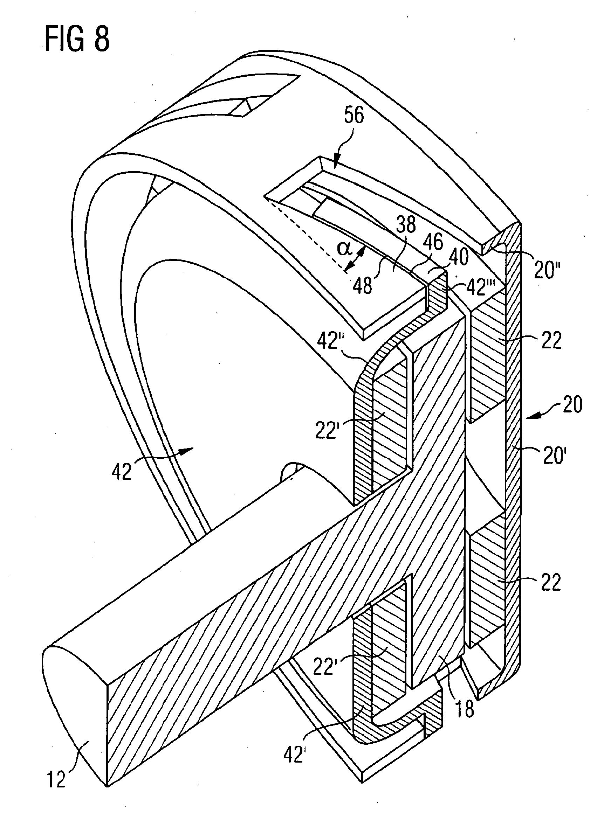

In den Figuren 7 und 8 ist eine vierte Ausführungsform eines Gurtaufrollers 10 dargestellt, die sich von der in Figur 4 gezeigten Anordnung im Wesentlichen durch die Ausbildung der Keilanordnung unterscheidet. Wie am besten in Figur 8 zu erkennen ist, weist ein erstes Trägerteil 20 des Gurtaufrollers 10 eine Mehrzahl von Schlitzen 56 auf, die über einen des Umfang eines zweiten Abschnitts 20" des ersten Trägerteils 20 verteilt in dem zweiten Abschnitt 20" des ersten Trägerteils 20 ausgebildet sind.

Ein zweites Trägerteil 42 umfasst einen zu einer Bremsscheibe 18 im Wesentlichen parallelen ersten Abschnitt 42' und einen im Wesentlichen senkrecht zu dem ersten Abschnitt 42' verlaufenden zweiten Abschnitt 42". Von dem zweiten Abschnitt 42" des zweiten Trägerteils 42 erstrecken sich mehrere über den Umfang des zweiten Abschnitts 42" verteilt angeordnete dritte Abschnitte 42''' im Wesentlichen senkrecht zu dem zweiten Abschnitt 42" und ragen durch die in dem zweiten Abschnitt 20" des ersten Trägerteils 20 ausgebildeten Schlitze 56.

Die Schlitze 56 sind so ausgebildet, dass eine mit einem jeweiligen dritten Abschnitt 42''' des zweiten Trägerteils 42 zusammenwirkende Seitenfläche relativ zur Bremsscheibe 18 um einen Winkel α geneigt ist und somit eine schräge Keilfläche 46 bildet. Die dritten Abschnitte 42''' des zweiten Trägerteils 42 sind relativ zur Bremsscheibe 18 ebenfalls um den Winkel α geneigt. Eine der durch einen jeweiligen Schlitz 56 gebildeten schrägen Keilfläche 46 gegenüberliegende Fläche eines jeden dritten Abschnitts 42''' des zweiten Trägerteils 42 bildet somit eine schräge Keilfläche 48.

Enden einer Rückstellfeder 44 zur Einstellung eines Abstands zwischen dem ersten und dem zweiten Trägerteil 20, 42 stützen sich an einer der Bremsscheibe 18 zugewandten Seite des ersten Abschnitts 20' des ersten Trägerteils 20 bzw. einer der Bremsscheibe 18 zugewandten Seite des ersten Abschnitts 42' des ortsfesten zweiten Trägerteils 42 ab.

Bei einer Betätigung eines Elektromotors 32 und einer damit verbundenen Verdrehung des ersten Trägerteils 20 im Uhrzeigersinn relativ zu dem ortsfesten zweiten Trägerteil 42 laufen die durch die Schlitze 56 gebildeten schrägen Keilflächen 46 auf die schrägen Keilflächen 48 der jeweiligen dritten Abschnitte 42''' des zweiten Trägerteils 42 auf. Dies hat, wie oben erläutert, zur Folge, dass das erste Trägerteil 20 entgegen der Kraft der Rückstellfeder 44 axial zur Bremsscheibe 18 hin, das heißt in Figur 7 nach links verschoben wird, so dass sich das erste Reibelement 22 an die Bremsscheibe 18 anlegt.

Im Übrigen entsprechen der Aufbau und die Funktionsweise des in den Figuren 7 und 8 gezeigten Gurtaufrollers 10 dem Aufbau und der Funktionsweise der in Figur 4 gezeigten Anordnung.

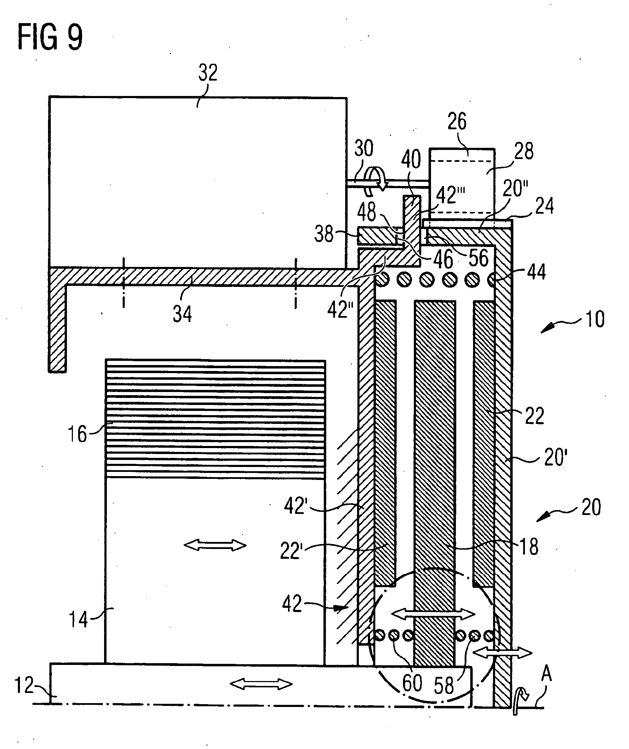

In Figur 9 ist eine Variante der vierten Ausführungsform des Gurtaufrollers 10 gemäß den Figuren 7 und 8 gezeigt, die zusätzlich mit jeweils in Form einer Feder ausgebildeten ersten und zweiten Distanzelementen 58, 60 zur Festlegung einer Ruhestellung einer Bremsscheibe 18 relativ zu ersten und zweiten Trägerteilen 20, 42 ausgestattet ist. Enden des ersten Distanzelements 58 stützen sich an einer der Bremsscheibe 18 zugewandten Seite eines ersten Abschnitts 20' eines ersten Trägerteils 20 bzw. einer gegenüberliegenden Seite der Bremsscheibe 18 ab. Enden des zweiten Distanzelements 60 stützen sich an einer der Bremsscheibe 18 zugewandten Seite eines ersten Abschnitts 42' eines zweiten Trägerteils 42 bzw. an einer gegenüberliegenden Seite der Bremsscheibe 18 ab. Gegebenenfalls kann der Gurtaufroller 10 auch nur ein Distanzelement 58, 60 umfassen.

Durch die ersten und zweiten Distanzelemente 58, 60 kann die Bremsscheibe 18 auf konstruktiv verhältnismäßig einfache Art und Weise relativ zu den ersten und zweiten Trägerteilen 20, 42 und somit zu an den ersten und zweiten Trägerteilen 20, 42 befestigten ersten und zweiten Reibelementen 22, 22' positioniert werden. Die ersten und zweiten Distanzelemente 58, 60 dienen somit ggf. gemeinsam mit der Rückstellfeder 44 der Einstellung eines gewünschten Lüftspiels zwischen den Reibelementen 22, 22' und der Bremsscheibe 18.

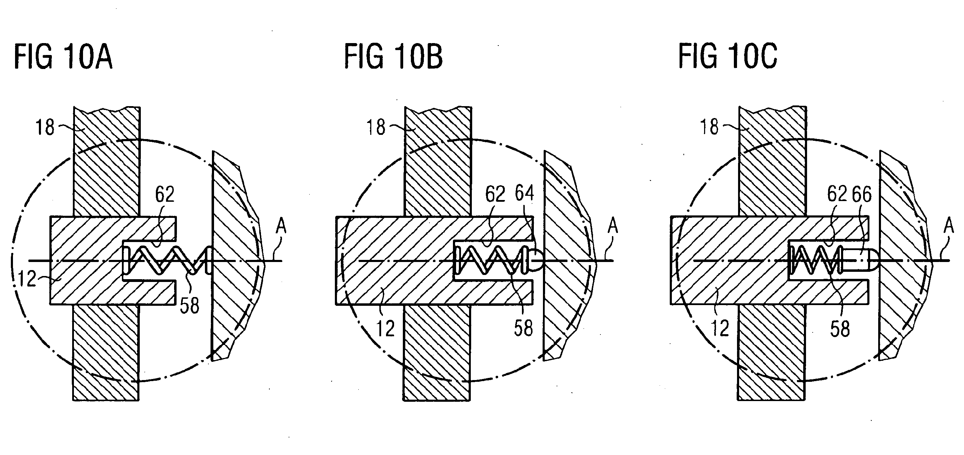

Wie in Figur 9 gezeigt ist, kann sich das erste Distanzelement 58 zwischen der der Bremsscheibe 18 zugewandten Seite des ersten Abschnitts 20' des ersten Trägerteils 20 und einer gegenüberliegenden Seite der Bremsscheibe 18 erstrecken. Alternativ dazu kann jedoch auch, wie in den Figuren 10a bis 10c gezeigt ist, in einer Welle 12 eine zylindrische Bohrung 62 zur Aufnahme des ersten Distanzelements 58 ausgebildet sein. Die Enden des ersten Distanzelements 58 stützen sich dann an der der Bremsscheibe 18 zugewandten Seite des ersten Abschnitts 20' des ersten Trägerteils 20 bzw. an einer gegenüberliegenden Stirnfläche der in der Welle 12 ausgebildeten Bohrung ab.

Zur Verminderung der Reibung zwischen dem Ende des ersten Distanzelements 58 und dem ersten Abschnitt 20' des ersten Trägerteils 20 kann sich das erste Distanzelement 58, wie in Figur 10b gezeigt ist, über eine Kugel 64 an der der Bremsscheibe 18 zugewandten Seite des ersten Abschnitts 20' des ersten Trägerteils 20 abstützen. Wie in Figur 10c dargestellt ist, kann die Kugel 64 auch durch einen leichter zu führenden Stift 66 ersetzt werden.

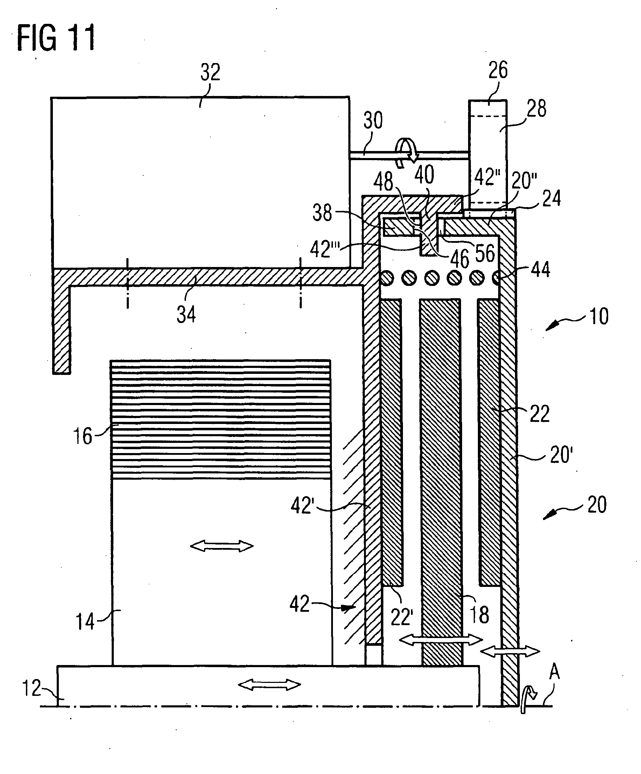

Bei einer in Figur 11 gezeigten fünften Ausführungsform eines Gurtaufrollers 10 weist ein zweites Trägerteil 42, ähnlich wie bei den in den Figuren 7 bis 9 dargestellten Anordnungen, mehrere sich senkrecht zu einem zweiten Abschnitt 42" des zweiten Trägerteils 42 erstreckende dritte Abschnitte 42"' auf. Die dritten Abschnitte 42"' sind jedoch nicht über den Außenumfang, sondern über einen Innenumfang des zweiten Abschnitts 42" des zweiten Trägerteils 42 verteilt an dem zweiten Abschnitt 42" befestigt. Mit anderen Worten, die dritten Abschnitte 42"' des zweiten Trägerteils 42 erstrecken sich von dem zweiten Abschnitt 42" des zweiten Trägerteils 42 radial in Richtung einer Welle 12 und ragen dabei durch entsprechende Schlitze 56, die in einem zweiten Abschnitt 20" eines ersten Trägerteils 20 ausgebildet sind.

Wie bei den in den Figuren 7 bis 9 gezeigten Anordnungen sind die Schlitze 56 so ausgebildet, dass eine mit einem jeweiligen dritten Abschnitt 42"' des zweiten Trägerteils 42 zusammenwirkende Seitenfläche relativ zu einer Bremsscheibe 18 um einen Winkel α geneigt ist und somit eine schräge Keilfläche 46 bildet. Die dritten Abschnitte 42"' des zweiten Trägerteils 42 sind relativ zur Bremsscheibe 18 ebenfalls um den Winkel α geneigt. Eine der durch einen jeweiligen Schlitz 56 gebildeten schrägen Keilfläche 46 gegenüberliegende Fläche eines jeden dritten Abschnitts 42"' des zweiten Trägerteils 42 bildet somit eine schräge Keilfläche 48.

Der zweite Abschnitt 42" des zweiten Trägerteils 42 erstreckt sich parallel zu dem zweiten Abschnitt 20" des ersten Trägerteils 20 über eine Länge, die ausreichend ist, um die in dem zweiten Abschnitt 20" des ersten Trägerteils 20 ausgebildeten Schlitze 56 zu überdecken. Die Bremsscheibe 18, Reibelemente 22, 22' sowie weitere zwischen dem ersten und dem zweiten Trägerteil 20, 42 angeordneten Komponenten sind dadurch besonders gut vor Umgebungseinflüssen geschützt.

Im Übrigen entsprechen der Aufbau und die Funktionsweise des in Figur 11 dargestellten Gurtaufrollers 10 dem Aufbau und der Funktionsweise der in den Figuren 7 bis 9 gezeigten Anordnungen.

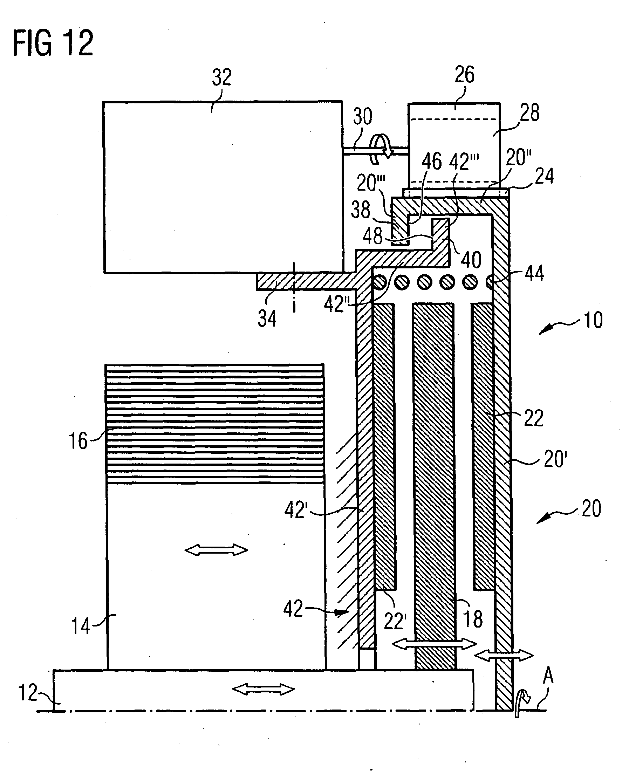

In einer in Figur 12 dargestellten sechsten Ausführungsform eines Gurtaufrollers 10 übergreift ein Gehäusebauteil 34 nicht länger eine Gurtrolle 14, sondern erstreckt sich lediglich über einen Teil des Außenumfangs der Gurtrolle 14. Das Gehäuseteil 34 dient jedoch weiterhin der Befestigung eines Elektromotors 32. Es versteht sich, dass die in Figur 12 gezeigte Ausführungsform des Gurtaufrollers 10 auch mit einem anders gestalteten Gehäuseteil 34, wie es z.B. in den Figuren 1 oder 4 gezeigt ist, ausgestattet werden kann.

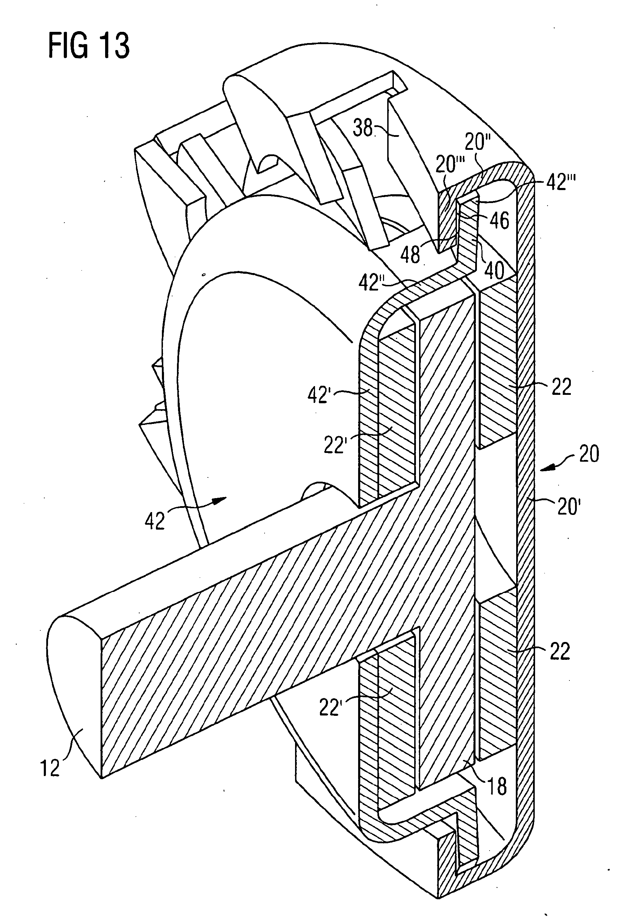

Wie am besten in der räumlichen Darstellung in Figur 13 erkennbar ist, weist ein erstes Trägerteil 20 einen im Wesentlichen parallel zu einer Bremsscheibe 18 angeordneten ersten Abschnitt 20' sowie einen zweiten Abschnitt 20" auf, der sich im Wesentlichen senkrecht zu dem ersten Abschnitt 20' erstreckt. Von dem zweiten Abschnitt 20" des ersten Trägerteils 20 ragen mehrere dritte Abschnitte 20"' von einem Innenumfang des zweiten Abschnitts 20" radial in Richtung einer Welle 12, wobei die dritten Abschnitte 20"' des ersten Trägerteils 20 relativ zur Bremsscheibe 18 um einen Winkel α geneigt sind. Eine dem ersten Abschnitt 20' des ersten Trägerteils 20 zugewandte Fläche eines jeden dritten Abschnitts 20"' des ersten Trägerteils 20 bildet somit jeweils eine schräge Keilfläche 46.

Ein zweites Trägerteil 42 umfasst einen im Wesentlichen parallel zur Bremsscheibe 18 angeordneten ersten Abschnitt 42' sowie einen zweiten Abschnitt 42", der sich im Wesentlichen senkrecht zu dem ersten Abschnitt 42' erstreckt. Von dem zweiten Abschnitt 42" ragen mehrere dritte Abschnitte 42"' radial nach außen, wobei die dritten Abschnitte 42"' des zweiten Trägerteils 42 ebenfalls um einen Winkel α relativ zur Bremsscheibe 18 geneigt sind. Jedem dritten Abschnitt 20"' des ersten Trägerteils 20 ist somit ein entsprechender dritter Abschnitt 42"' des zweiten Trägerteils 42 zugeordnet, so dass jede schräge Keilfläche 46 mit einer gegenüberliegenden schrägen Keilfläche 48 zusammenwirkt, die an einem jeweiligen dritten Abschnitt 42"' des zweiten Trägerteils 42 ausgebildet ist.

Bei einer Betätigung des Elektromotors 32 wird das erste Trägerteil 20 im Uhrzeigersinn relativ zu dem zweiten Trägerteil 42 verdreht, so dass die an den dritten Abschnitten 20"' des ersten Trägerteils 20 ausgebildeten schrägen Keilflächen 46 auf die an den zugehörigen dritten Abschnitten 42"' des zweiten Trägerteils 42 ausgebildeten schrägen Keilflächen 48 auflaufen. Dies führt dazu, dass das erste Trägerteil 20 axial zur Bremsscheibe 18 hin verschoben wird, so dass sich ein erstes Reibelement 22 an die Bremsscheibe 18 anlegt.

Im Übrigen entsprechen der Aufbau und die Funktionsweise des in den Figuren 12 und 13 gezeigten Gurtaufrollers 10 dem Aufbau und der Funktionsweise der in den Figuren 7 bis 9 dargestellten Anordnung.

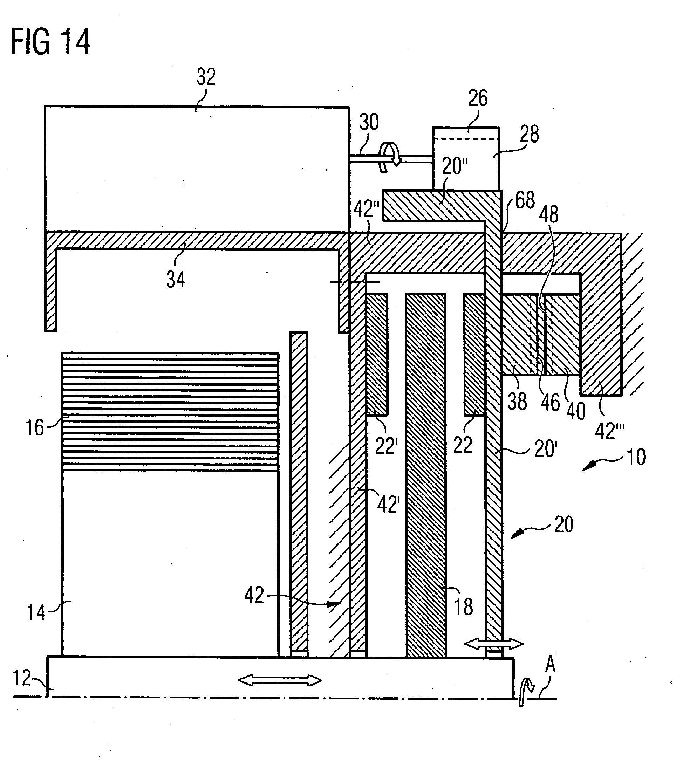

Figur 14 zeigt eine siebte Ausführungsform eines Gurtaufrollers 10, der sich von der in Figur 1 dargestellten Anordnung im Wesentlichen durch die Positionierung einer Keilanordnung unterscheidet. Gemäß Figur 14 weist ein erstes Trägerteil 20 einen im Wesentlichen parallel zu einer Bremsscheibe 18 angeordneten ersten Abschnitt 20' sowie einen zweiten Abschnitt 20" auf, der sich im Wesentlichen senkrecht zu dem ersten Abschnitt 20' um den Außenumfang der Bremsscheibe 18 erstreckt.

Ein zweites Trägerteil 42 umfasst einen im Wesentlichen parallel zur Bremsscheibe 18 angeordneten ersten Abschnitt 42', einen sich im Wesentlichen senkrecht von dem ersten Abschnitt 42' um den Außenumfang der Bremsscheibe 18 erstreckenden zweiten Abschnitt 42" und schließlich einen dritten Abschnitt 42"', der von dem zweiten Abschnitt 42" radial in Richtung einer Welle 12 ragt und somit im Wesentlichen parallel zu dem ersten Abschnitt 42' sowie der Bremsscheibe 18 angeordnet ist. In dem zweiten Abschnitt 42" des zweiten Trägerteils 42 ist ein sich entlang des Umfangs des zweiten Trägerteils 42 erstreckender Schlitz 68 ausgebildet, der von dem ersten Abschnitt 20' des ersten Trägerteils 20 durchsetzt wird.

Ein erster Keil 38 ist an einer von der Bremsscheibe 18 abgewandten Seite des ersten Abschnitts 20' des ersten Trägerteils 20 angeordnet. Ein mit dem ersten Keil 38 zusammenwirkender zweiter Keil 40 ist an einer dem ersten Abschnitt 20' des ersten Trägerteils 20 gegenüberliegenden Fläche des dritten Abschnitts 42"' des ortsfesten zweiten Trägerteils 42 befestigt. Die aus dem ersten und dem zweiten Keil 38, 40 bestehende Keilanordnung ist somit nicht wie in den bisher gezeigten Ausführungsformen des Gurtaufrollers 10 im Bereich einer Gurtrolle 14, sondern auf einer von der Gurtrolle 14 abgewandten Seite der Bremsscheibe 18 positioniert.

Im Übrigen entsprechen der Aufbau und die Funktionsweise des in Figur 14 gezeigten Gurtaufrollers dem Aufbau und der Funktionsweise der in Figur 1 dargestellten Anordnung.

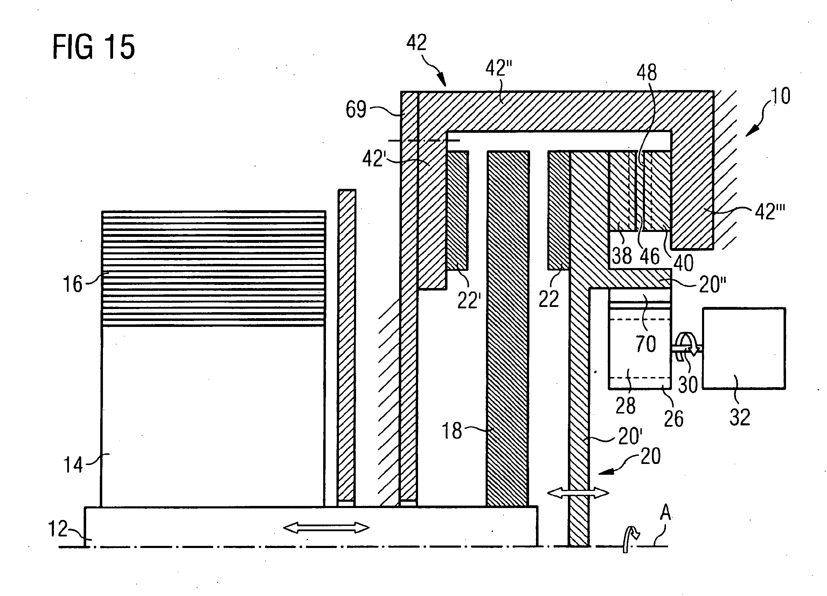

Bei einem in Figur 15 gezeigten Gurtaufroller 10 ist ein Elektromotor 32 nicht wie bei der in Figur 14 dargestellten Anordnung bezüglich einer Gurtrolle 14 radial außenliegend positioniert, sondern auf einer von der Gurtrolle 14 abgewandten Seite einer Bremsscheibe 18 angeordnet. Auf ein Gehäuseteil 34 zur Befestigung des Elektromotors 32 kann daher verzichtet werden.

Ein erstes Trägerteil 20 weist einen ersten im Wesentlichen parallel zur Bremsscheibe 18 angeordneten ersten Abschnitt 20' sowie einen zweiten Abschnitt 20" auf, der sich im Wesentlichen senkrecht von dem ersten Abschnitt 20' und bezüglich einer erste und zweite Keile 38, 40 umfassenden Keilanordnung radial innenliegend erstreckt. Wie in Figur 15 erkennbar ist, ist der zweite Abschnitt 20" des ersten Trägerteils 20 Teil eines L-förmigen Bauteils, das an dem ersten Abschnitt 20' des ersten Trägerteils 20 befestigt ist. Es versteht sich jedoch, dass das erste Trägerteil 20 auch einstückig ausgebildet sein kann.

Ein zweites Trägerteil 42 umfasst einen im Wesentlichen parallel zur Bremsscheibe 18 angeordneten ersten Abschnitt 42', einen sich im Wesentlichen senkrecht von dem ersten Abschnitt 42' um den Außenumfang der Bremsscheibe 18 erstreckenden zweiten Abschnitt 42" und schließlich einen dritten Abschnitt 42"', der von dem zweiten Abschnitt 42" radial in Richtung einer Welle 12 ragt. Der erste Abschnitt 42' des zweiten Trägerteils 42 ist starr an einem ortsfesten Gehäuseelement 69 befestigt.

An einem Innenumfang des zweiten Abschnitts 20" des zweiten Trägerteils 20 ist eine Innenverzahnung 70 ausgebildet, die mit einer Außenverzahnung 26 eines Zahnrads 28 zusammenwirkt, welches über eine Motorwelle 30 mit dem Elektromotor 32 in Verbindung steht.

Im Übrigen entsprechen der Aufbau und die Funktionsweise des in Figur 15 gezeigten Gurtaufrollers 10 dem Aufbau und der Funktionsweise der in Figur 14 gezeigten Anordnung.

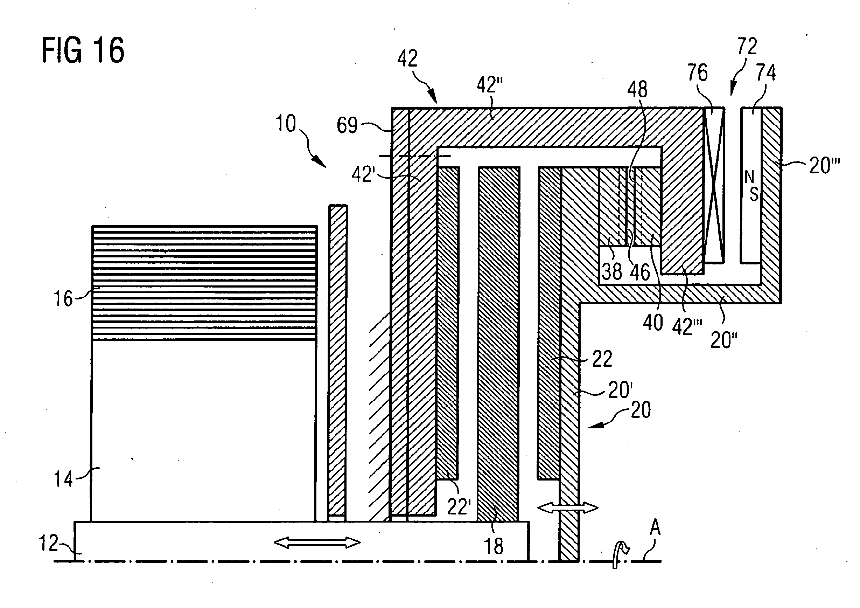

Figur 16 zeigt eine neunte Ausführungsform eines Gurtaufrollers 10, die anstelle eines Elektromotors 32 einen Direktantrieb 72 umfasst. Ähnlich wie bei der in Figur 15 gezeigten Anordnung umfasst ein erstes Trägerteil 20 einen im Wesentlichen parallel zu einer Bremsscheibe 18 angeordneten ersten Abschnitt 20' sowie einen sich senkrecht zu dem ersten Abschnitt 20' und bezüglich einer erste und zweite Keile 38, 40 umfassenden Keilanordnung radial innenliegend erstreckenden zweiten Abschnitt 20". Von dem zweiten Abschnitt 20" des ersten Trägerteils 20 erstreckt sich jedoch ein dritter Abschnitt 20"' wiederum im Wesentlichen parallel zur Bremsscheibe 18 radial nach außen. Wie in Figur 16 erkennbar ist, sind der zweite und der dritte Abschnitt 20", 20"' des ersten Trägerteils 20 Teile eines im Wesentlichen U-förmigen Bauteils, das an dem ersten Abschnitt 20' des ersten Trägerteils 20 befestigt ist. Es versteht sich jedoch, dass das erste Trägerteil 20 auch einstückig ausgebildet sein kann.

Ähnlich wie bei der in Figur 15 gezeigten Anordnung umfasst ein zweites Trägerteil 42 einen im Wesentlichen parallel zur Bremsscheibe 18 angeordneten und starr an einem ortsfesten Gehäuseelement 69 befestigten ersten Abschnitt 42' und einen sich im Wesentlichen senkrecht zu dem ersten Abschnitt 42' um den Außenumfang der Bremsscheibe 18 erstreckenden zweiten Abschnitt 42". Ein dritter Abschnitt 42"' ragt von dem zweiten Abschnitt 42" des zweiten Trägerteils 42 radial in Richtung einer Welle 12.

Der dritte Abschnitt 20"' des ersten Trägerteils 20 trägt auf seiner der Bremsscheibe 18 zugewandten Seite eine Mehrzahl von stabförmigen Magneten 74, so dass das erste Trägerteil 20 einen Läufer des Direktantriebs 72 bildet. Eine ringförmige Statorspulenwicklung 76 ist an einer von der Bremsscheibe 18 abgewandten Seite des dritten Abschnitts 42"' des zweiten Trägerteils 42 befestigt.

Bei einer Bestromung des Direktantriebs 72 wird das erste Trägerteil 20 unmittelbar, das heißt ohne Zwischenschaltung eines Getriebes, in eine Drehbewegung im Uhrzeigersinn um die Drehachse A versetzt. Dabei läuft wiederum eine schräge Keilfläche 46 des an dem ersten Trägerteil 20 angebrachten ersten Keils 38 auf eine schräge Keilfläche 48 des an dem ortsfesten zweiten Trägerteil 42 angebrachten zweiten Keils 40 auf, so dass das erste Trägerteil 20 axial zur Bremsscheibe 18 hin verschoben und ein erstes Reibelement 22 gegen die Bremsscheibe 18 gedrückt wird.

Durch den Einsatz eines Direktantriebs 72 kann auf den Einsatz eines Getriebes zur Übertragung der von dem Direktantrieb 72 erzeugten Antriebskraft auf das erste Trägerteil 20 verzichtet werden. Darüber hinaus wird durch die Anziehungskraft zwischen den stabförmigen Magneten 74 und der Statorspulenwicklung 76, die das erste Trägerteil 20 axial in Richtung der Bremsscheibe 18 drängt, eine zusätzliche Normalkraft an der Bremsscheibe 18 erzeugt.

Im Übrigen entsprechen der Aufbau und die Funktionsweise des Gurtaufrollers 10 gemäß Figur 16 dem Aufbau und der Funktionsweise der in Figur 15 gezeigten Anordnung.

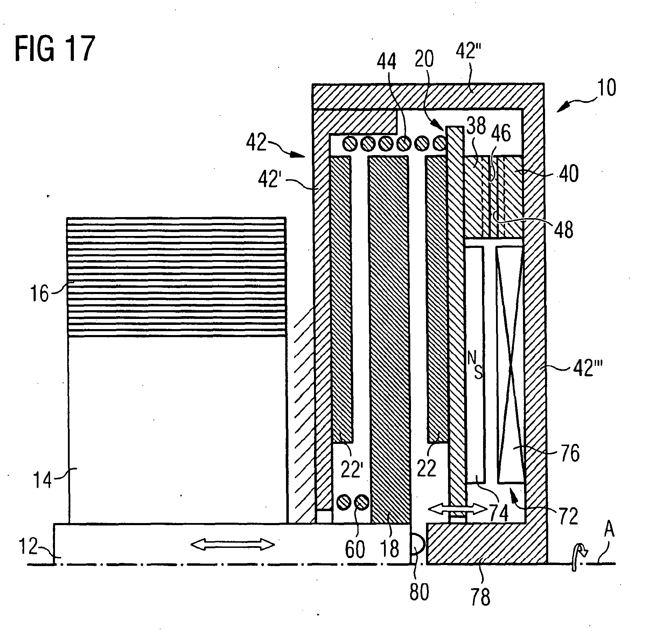

Eine zehnte Ausführungsform eines mit einem Direktantrieb 72 ausgestatteten Gurtaufrollers 10 ist in Figur 17 gezeigt. Im Gegensatz zu der in Figur 16 veranschaulichten Anordnung ist ein erstes Trägerteil 20 jedoch scheibenförmig ausgebildet und trägt auf seiner von einer Bremsscheibe 18 abgewandten Seite sowohl einen ersten Keil 38 als auch eine Mehrzahl stabförmiger Magneten 74 des Direktantriebs 72.

Ein ortsfestes zweites Trägerteil 42 umfasst einen im Wesentlichen parallel zur Bremsscheibe 18 angeordneten ersten Abschnitt 42' und einen sich im Wesentlichen senkrecht zu dem ersten Abschnitt 42' um den Außenumfang der Bremsscheibe 18 erstreckenden zweiten Abschnitt 42''. Von dem zweiten Abschnitt 42'' des zweiten Trägerteils 42 erstreckt sich ein wiederum im Wesentlichen parallel zur Bremsscheibe 18 angeordneter dritter Abschnitt 42''', der auf seiner der Bremsscheibe 18 zugewandten Seite einen mit dem ersten Keil 38 zusammenwirkenden zweiten Keil 40 sowie eine Statorspulenwicklung 76 des Direktantriebs 72 trägt. Der dritte Abschnitt 42''' des zweiten Trägerteils 42 ist starr mit einem Lagerabschnitt 78 verbunden, der eine axiale Verlängerung einer Welle 12 bildet, wobei sich die Welle 12 über ein Lager 80 drehbar an dem Lagerabschnitt 78 des zweiten Trägerteils 42 abstützt. Wie in Figur 17 erkennbar ist, wird der erste Abschnitt 42' des zweiten Trägerteils 42 durch ein ortsfestes Bauteil gebildet, das starr mit einem den zweiten und den dritten Abschnitt 42'', 42''' sowie den Lagerabschnitt 78 des zweiten Trägerteils 42 bildenden Bauteil verbunden ist. Es versteht sich jedoch, dass das zweite Trägerteil 42 auch einstückig ausgebildet sein kann.

Zur Festlegung einer Ruhestellung des ersten Trägerteils 20 relativ zu dem ersten Abschnitt 42' des zweiten Trägerteils 42 ist eine Rückstellfeder 44 vorhanden, deren Enden sich an einer der Bremsscheibe 18 zugewandten Seite des ersten Trägerteils 20 bzw. einer der Bremsscheibe 18 zugewandten Seite des ersten Abschnitts 42' des ersten Trägerteils 42 abstützen. Die Rückstellfeder 44, das Lager 80 und ein in Form einer Feder ausgebildetes und zwischen dem ersten Abschnitt 42' des zweiten Trägerteils 42 und der Bremsscheibe 18 angeordnetes Distanzelement 60 ermöglichen somit gemeinsam die Einstellung eines gewünschten Lüftspiels zwischen an den ersten und zweiten Trägerteilen 20, 42 befestigten Reibelementen 22, 22' und der Bremsscheibe 18.

Wie aus Figur 17 ersichtlich ist, kann durch eine bezüglich der ersten und zweiten Keile 38, 40 radial innenliegende Anordnung des Direktantriebs 72 eine besonders kompakte Anordnung realisiert werden, bei der nicht nur der Direktantrieb 72, sondern auch die Keile 38, 40, das erste Trägerteil 20, die Reibelemente 22, 22' sowie die Bremsscheibe 18 gut gegen Umwelteinflüsse geschützt sind.

Bei einer Bestromung des Direktantriebs 72 wird das erste Trägerteil 20, wie bei der in Figur 16 gezeigten Anordnung, relativ zu dem zweiten Trägerteil 42 in eine Drehbewegung um die Drehachse A versetzt. Dabei läuft eine schräge Keilfläche 46 des an dem ersten Trägerteil 20 festgelegten ersten Keils 38 auf eine schräge Keilfläche 48 des an dem dritten Abschnitt 42''' des zweiten Trägerteils 42 befestigten zweiten Keils 40 auf, so dass das erste Trägerteil axial zur Bremsscheibe 18 hin verschoben und das erste Reibelement 22 gegen die Bremsscheibe 18 gedrückt wird.

Im Übrigen entsprechen der Aufbau und die Funktionsweise des in Figur 17 gezeigten Gurtaufrollers 10 dem Aufbau und der Funktionsweise der in Figur 16 gezeigten Anordnung.

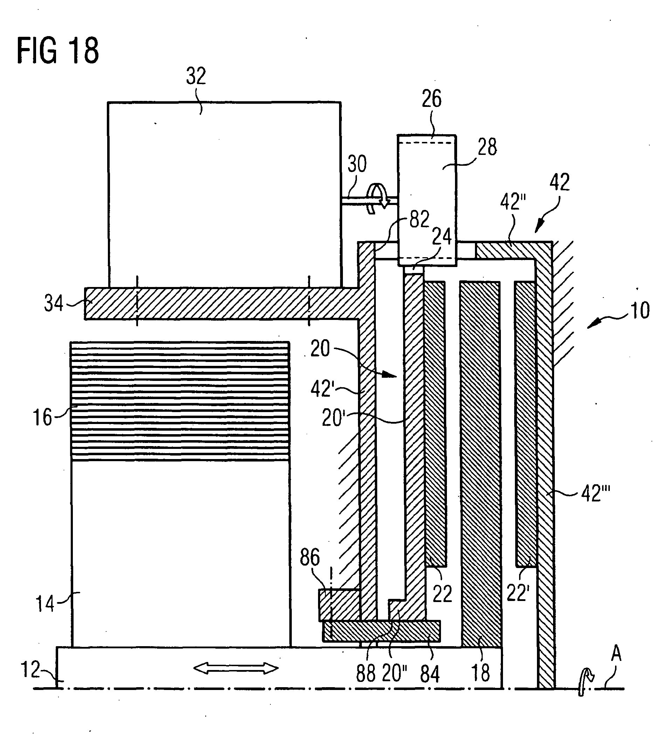

Eine elfte Ausführungsform eines Gurtaufrollers 10, die sich von der in Figur 1 gezeigten Anordnung insbesondere durch die Ausgestaltung der Selbstverstärkungsanordnung unterscheidet, ist in Figur 18 dargestellt. Bei dem Gurtaufroller 10 gemäß Figur 18 ist ein Elektromotor 32, wie bei der in Figur 1 gezeigten Anordnung, bezüglich einer Gurtrolle 14 radial außenliegend angeordnet und an einem Gehäuseteil 34 befestigt. Das Gehäuseteil 34 erstreckt sich von einer von einer Bremsscheibe 18 abgewandten Seite eines ersten Abschnitts 42' eines ortsfesten zweiten Trägerteils 42 um den Außenumfang der Gurtrolle 14. Das zweite Trägerteil 42 weist ferner einen sich von dem ersten Abschnitt 42 im Wesentlichen senkrecht erstreckenden zweiten Abschnitt 42'' sowie einen wiederum im Wesentlichen parallel zur Bremsscheibe 18 angeordneten scheibenförmigen dritten Abschnitt 42''' auf.

Ein über eine Motorwelle 30 mit dem Elektromotor 32 verbundenes Zahnrad 28 ragt durch eine in dem zweiten Abschnitt 42'' des zweiten Trägerteils 42 ausgebildete Öffnung 82 und wirkt mit einer Außenverzahnung 24 zusammen, die an einem Außenumfang eines sich im Wesentlichen parallel zur Bremsscheibe 18 erstreckenden ersten Abschnitts 20' eines ersten Trägerteils 20 ausgebildet ist. Das zwischen dem ersten Abschnitt 42' des zweiten Trägerteils 42 und der Bremsscheibe 18 positionierte erste Trägerteil 20 weist ferner einen im Wesentlichen hohlzylindrisch ausgebildeten und mit dem ersten Abschnitt 20' verbundenen zweiten Abschnitt 20'' auf. Auf seiner der Bremsscheibe 18 zugewandten Seite trägt der erste Abschnitt 20' des ersten Trägerteils 20 ein erstes Reibelement 22. Ein zweites Reibelement 22' ist an einer der Bremsscheibe 18 zugewandten Seite des dritten Abschnitts 42''' des zweiten Trägerteils 42 angebracht.

Eine von einer Welle 12 durchsetzte hohlzylindrisch ausgebildete Spindel 84 ist mittels eines ebenfalls hohlzylindrisch ausgebildeten Befestigungsabschnitts 86 starr an dem ersten Abschnitt 42' des zweiten Trägerteils 42 befestigt. Die Spindel 84 wirkt mit einem Gewinde 88 zusammen, das an einem Innenumfang des hohlzylindrisch ausgebildeten zweiten Abschnitts 20'' des ersten Trägerteils 20 vorgesehen ist.

Bei einer Betätigung des Elektromotors 32 wird das erste Trägerteil 20 im Uhrzeigersinn relativ zu dem ortsfesten zweiten Trägerteil 42 verdreht. Dabei wirkt das an dem zweiten Abschnitt 20' des ersten Trägerteils 20 ausgebildete Gewinde 88 mit der Spindel 84 zusammen, so dass das erste Trägerteil 20 axial zur Bremsscheibe hin, das heißt in Figur 18 nach rechts verschoben wird. Infolgedessen wird das erste Reibelement 22 gegen die Bremsscheibe 18 gedrückt. Wenn sich das erste Reibelement 22 an die Bremsscheibe 18 anlegt, wird die Bremsscheibe 18 aufgrund der schwimmenden Lagerung der Welle 12 gemeinsam mit dem ersten Trägerteil 20 in Richtung des zweiten Reibelements 22', das heißt in Figur 18 nach rechts verschoben, so dass sich die Bremsscheibe 18 nahezu ohne Verzögerung auch an das zweite Reibelement 22' anlegt.

Durch das Zusammenwirken des an dem zweiten Abschnitt 20" des ersten Trägerteils 20 ausgebildeten Gewindes 88 mit der Spindel 84 wird, ähnlich wie bei der oben beschriebenen Keilanordnung, eine Selbstverstärkungswirkung erzielt. Mit anderen Worten, die von dem Elektromotor 32 über das Zahnrad 28 eingeleitete Eingangskraft wird selbsttätig und ohne weitere von außen einzubringende Kräfte verstärkt, wobei bezüglich des beim Zusammenwirken des Gewindes 88 mit der Spindel 84 entstehenden Kräftegleichgewichts auf die Figur 3 verwiesen werden kann.

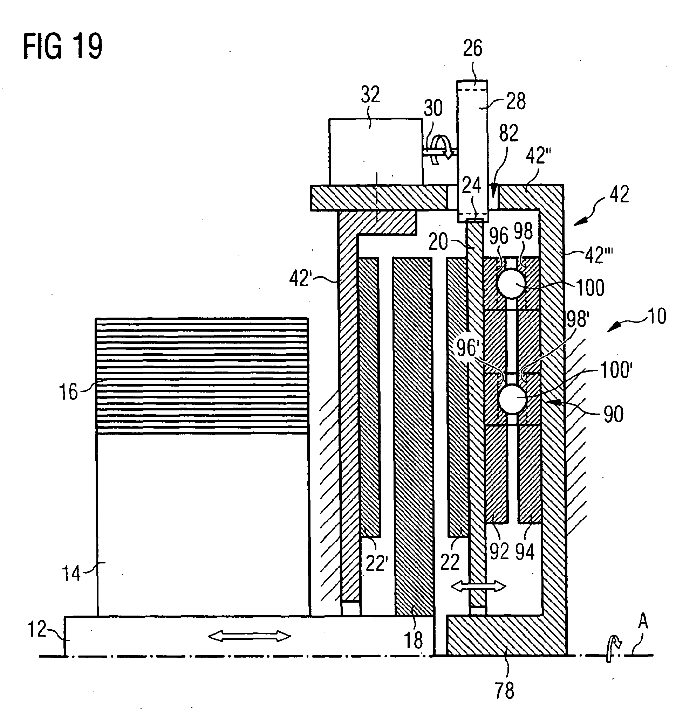

Eine weitere Variante einer Selbstverstärkungsanordnung ist in Figur 19 gezeigt. Bei einer zwölften Ausführungsform eines Gurtaufrollers 10 gemäß Figur 19 umfasst ein zweites Trägerteil 42 einen im Wesentlichen parallel zu einer Bremsscheibe 18 angeordneten ersten Abschnitt 42', einen sich im Wesentlichen senkrecht von dem ersten Abschnitt 42', das heißt parallel zu einer Welle 12 erstreckenden zweiten Abschnitt 42" sowie einen wiederum im Wesentlichen parallel zur Bremsscheibe 18 angeordneten dritten Abschnitt 42"'. Der dritte Abschnitt 42"' des zweiten Trägerteils 42 ist starr mit einem Lagerabschnitt 78 verbunden, der eine axiale Verlängerung einer Welle 12 bildet. Wie in Figur 19 erkennbar ist, wird der erste Abschnitt 42' des zweiten Trägerteils 42 durch ein ortsfestes Bauteil gebildet, das starr mit einem den zweiten und den dritten Abschnitt 42", 42"' sowie den Lagerabschnitt 78 des zweiten Trägerteils 42 bildenden Bauteil verbunden ist. Es versteht sich jedoch, dass das zweite Trägerteil 42 auch einstückig ausgebildet sein kann.

Ein Elektromotor 32, der über eine Motorwelle 30 mit einem Zahnrad 28 verbunden ist, ist an einem Außenumfang des zweiten Abschnitts 42" des zweiten Trägerteils 42 befestigt. Das Zahnrad 28 ragt durch eine in dem zweiten Abschnitt 42" des zweiten Trägerteils 42 ausgebildete Öffnung 82 und wirkt mit einer Außenverzahnung 26 zusammen, die an einem Außenumfang eines ersten Trägerteils 20 ausgebildet ist. Das scheibenförmige erste Trägerteil 20 ist im Wesentlichen parallel zur Bremsscheibe 18 angeordnet und trägt auf seiner der Bremsscheibe 18 zugewandten Seite ein erstes Reibelement 22. Ein zweites Reibelement 22' ist auf einer der Bremsscheibe 18 zugewandten Seite des ersten Abschnitts 42' des zweiten Trägerteils 42 angebracht.

Auf einer von der Bremsscheibe 18 abgewandten Seite des ersten Trägerteils 20 ist zwischen dem ersten Trägerteil 20 und dem dritten Abschnitt 42"' des zweiten Trägerteils 42 eine Kugel/Rampen-Anordnung 90 vorgesehen. Die Kugel/Rampen-Anordnung 90 weist ein erstes und ein zweites Lagerelement 92, 94 auf, an denen jeweils relativ zur Bremsscheibe 18 geneigte Keilflächen 96, 96', 98, 98' ausgebildet sind. Die Keilflächen 96, 96', 98, 98' bilden innere und äußere Kugelbahnen, in denen Kugeln 100, 100' zur rollenden Abstützung der schrägen Keilflächen 96, 96', 98, 98' geführt sind.

Bei einer Betätigung des Elektromotors 32 wird das erste Trägerteil 20 über das Zahnrad 28 relativ zu dem zweiten Trägerteil 42 in eine Drehbewegung im Uhrzeigersinn versetzt. Durch das Zusammenwirken der schrägen Keilflächen 96, 96', 98, 98' mit den Kugeln 100, 100' sorgt die Kugel/Rampen-Anordnung 90 daraufhin für eine axiale Verschiebung des ersten Trägerteils 20 in Richtung der Bremsscheibe 18, so dass das erste Reibelement 22 gegen die Bremsscheibe 18 gedrückt wird. Anschließend wird die Bremsscheibe 18 aufgrund der schwimmenden Lagerung der Welle 12 gemeinsam mit dem ersten Trägerteil 20 in Richtung des zweiten Reibelements 22', das heißt in Figur 18 nach links verschoben, so dass sich die Bremsscheibe 18 nahezu ohne Verzögerung auch an das zweite Reibelement 22' anlegt.

Infolge des Zusammenwirkens der schrägen Keilflächen 96, 96', 98, 98' mit den Kugeln 100, 100' hat die Kugel/Rampen-Anordnung 90 eine selbstverstärkende Wirkung, das heißt die über den Elektromotor 32 eingeleitete Betätigungskraft wird, wie bei der oben beschriebenen Keilanordnung, selbsttätig verstärkt, wobei bezüglich des an der Kugel/Rampen-Anordnung 90 entstehenden Kräftegleichgewichts auf die Darstellung in Figur 3 verwiesen werden kann.

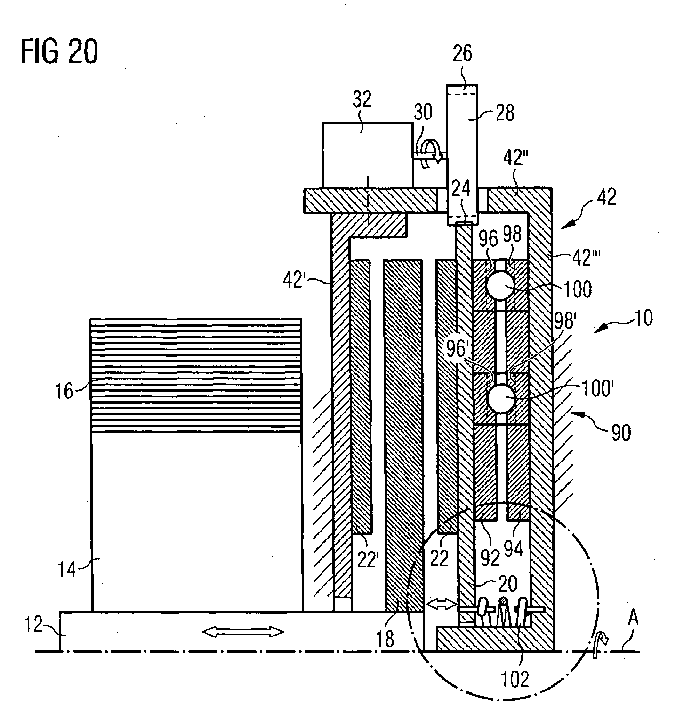

Im Unterschied zu der in Figur 19 dargestellten Anordnung weist eine in Figur 20 gezeigte dreizehnte Ausführungsform eines Gurtstraffer 10 zusätzlich eine Spiralfeder 102 auf, deren Enden an einem dritten Abschnitt 42"' eines zweiten Trägerteils 42 bzw. einem ersten Trägerteil 20 befestigt sind. Die Spiralfeder 102 ist somit dazu in der Lage, eine in Umfangsrichtung des ersten Trägerteils 20 gerichtete Kraft auf das erste Trägerteil 20 aufzubringen.

Durch die Spiralfeder 102 kann eine Kraft, die aus der bei einer Betätigung eines Elektromotors 32 eingeleiteten Normalkraft $F_N$ an einer Bremsscheibe 18 und der an der Bremsscheibe 18 entstehenden Reibkraft $F_R$ resultiert, hinsichtlich ihrer Richtung und ihres Betrag variiert werden. Grundsätzlich hängt die Richtung und der Betrag der resultierenden Kraft von einem Steigungswinkel der schrägen Keilflächen 96, 96', 98, 98' und einem Reibwert von an den ersten und zweiten Trägerteilen 20, 42 befestigten Reibelementen 22, 22' ab. Um eine optimale Wirkung der Selbstverstärkungsanordnung zu erzielen, sollte die resultierende Kraft senkrecht zu den an einem ersten Lagerelement 92 ausgebildeten schrägen Keilflächen 96, 96' gerichtet sein. Da durch die Spiralfeder 102 die Richtung sowie der Betrag der resultierenden Kraft beeinflusst werden kann, ermöglicht die Spiralfeder 102 eine Kompensation einer Abweichung des Steigungswinkels sowie des Reibwerts der Reibelemente 22, 22' von einem bezüglich der Auswirkung auf die resultierende Kraft optimalen Wert.

Als Alternative zum Einsatz der Spiralfeder 92 können auch die Reibelemente 22, 22' aus einem magnetischen Material hergestellt werden, um die Richtung und den Betrag der Kraft, die aus der bei einer Betätigung des Elektromotors 32 eingeleiteten Normalkraft $F_N$ an der Bremsscheibe 18 und der an der Bremsscheibe 18 entstehenden Reibkraft $F_R$ resultiert, hinsichtlich ihres Betrags und ihrer Richtung zu beeinflussen. Schließlich ist es ferner möglich, das erste Trägerteil 20 aus einem magnetischen Material herzustellen, um eine Veränderung des Betrags oder der Richtung der resultierenden Kraft zu bewirken. Durch den Einsatz magnetischer Reibelemente 22, 22' und/oder eines magnetischen ersten Trägerteils 20 ist ebenso wie mit einer Feder 102, die eine nicht lineare Federkennlinie aufweist, eine nicht lineare Variation der resultierenden Kraft möglich. Darüber hinaus wird durch die von den magnetischen Reibelementen 22, 22' und/oder dem magnetischen ersten Trägerteil 20 aufgebrachte Magnetkraft eine zusätzliche Normalkraft an der Bremsscheibe 18 erzeugt, die im Crashfall für eine Verstärkung der Abbremswirkung sorgt und ein rasches Anspringen der Bremsanordnung ermöglicht.

Es versteht sich, dass die gezeigten und oben detailliert erläuterten einzelnen Merkmale der in den Figuren 1, 4 bis 9 und 11 bis 21 gezeigten Anordnungen wie gewünscht miteinander kombiniert werden können. Beispielsweise kann bei dem in Figur 1 gezeigten Gurtaufroller 10 der Elektromotor 32 durch einen Direktantrieb ersetzt werden. Darüber hinaus können alle gezeigten Gurtaufrollervariationen, wie gewünscht, mit einer Rückstellfeder 44 sowie mit ersten und zweiten Distanzelementen 58, 60 oder mit einer Spiralfeder 102 ausgestattet werden.

Bei allen in den Figuren gezeigten Gurtaufrollern 10 ist eine Bremsscheibe 18 drehfest mit einer Welle 12 einer Gurtrolle 14 verbunden. Abweichend davon ist es jedoch auch möglich, eine Bremsscheibe im Normalbetrieb des Gurtaufrollers von einer Gurtrollenwelle zu entkoppeln und lediglich im Crashfall durch einen geeigneten Mechanismus, beispielsweise einen Klinkenmechanismus, drehfest mit der Gurtrollenwelle zu verbinden. Die Bremsscheibe kann dann in ihrer Ruhestellung ohne Lüftspiel an einem Reibelement anliegen.

**Patentansprüche**

1. Gurtaufroller (10) mit einer drehbaren Gurtrolle (14), einem mit der Gurtrolle (14) drehfest verbindbaren Drehglied (18) und einem Aktuator (32; 72), der eine Betätigungskraft erzeugt und auf mindestens ein Reibelement (22, 22') wirkt, um das Reibelement (22, 22') zur Abbremsung einer Drehbewegung der Gurtrolle (14) mit dem drehfest mit der Gurtrolle (14) verbindbaren Drehglied (18) in Eingriff zu bringen, **dadurch gekennzeichnet, dass** zwischen dem Aktuator (32; 72) und dem Drehglied (18) eine Anordnung zur Selbstverstärkung der von dem Aktuator (32; 72) erzeugten Betätigungskraft angeordnet ist.

2. Gurtaufroller nach Anspruch 1,
   **dadurch gekennzeichnet, dass** der Aktuator (32; 72) mit einer elektronischen Steuereinheit verbunden ist, die dazu eingerichtet ist, den Aktuator (32; 72) in Abhängigkeit mindestens eines insassenspezifischen, fahrzeugspezifischen und/oder situationsspezifischen Parameters zu steuern, um eine daran angepasste Abbremsung der Drehbewegung der Gurtrolle (14) zu bewirken.

3. Gurtaufroller nach Anspruch 1 oder 2,
   **dadurch gekennzeichnet, dass** die Selbstverstärkungsanordnung ein erstes Trägerteil (20), das mindestens ein erstes Kraftverstärkungselement (38; 88; 92) trägt, und zweites Trägerteil (42) umfasst, das mindestens ein zweites Kraftverstärkungselement (40; 84; 94, 100, 100') trägt, wobei das erste und das zweite Trägerteil (20, 42) infolge der von dem Aktuator (32; 72) erzeugten Betätigungskraft relativ zueinander verdrehbar sind.

4. Gurtaufroller nach Anspruch 3,
   **dadurch gekennzeichnet, dass** das erste Kraftverstärkungselement (38; 92) eine schräge Keilfläche (46; 96, 96') mit einem Steigungswinkel ($\alpha$) umfasst, die sich gleitend oder rollend an dem zweiten Kraftverstärkungselement (40; 94, 100, 100') abstützt.

5. Gurtaufroller nach Anspruch 4,
   **dadurch gekennzeichnet, dass** das erste Kraftverstärkungselement (92) und das zweite Kraftverstärkungselement (94) eine Kugel/Rampen-Anordnung (90) bilden.

6. Gurtaufroller nach Anspruch 3,

**dadurch gekennzeichnet, dass** das erste Kraftverstärkungselement (88) in Form eines an dem ersten Trägerteil (20) vorgesehenen Gewindes und das zweite Kraftverstärkungselement (84) in Form einer Spindel ausgebildet ist, die mit dem an dem ersten Trägerteil (20) vorgesehenen Gewinde (88) zusammenwirkt.

7. Gurtaufroller nach einem der Ansprüche 3 bis 6,
**dadurch gekennzeichnet, dass** das zweite Trägerteil (42) ortsfest ausgebildet ist und das erste Trägerteil (20) mit dem Aktuator (32; 72) verbindbar ist, um das erste Trägerteil (20) relativ zu dem zweiten Trägerteil (42) zu verdrehen.

8. Gurtaufroller nach einem der Ansprüche 1 bis 7,
**dadurch gekennzeichnet, dass** der Aktuator (32) in Form einer rotierenden elektrischen Maschine ausgebildet und mit einem Zahnrad- oder einem Schneckengetriebe (26, 28; 52, 54) verbindbar ist.

9. Gurtaufroller nach einem der Ansprüche 1 bis 8,
**dadurch gekennzeichnet, dass** der Aktuator (72) in Form eines Direktantriebs oder in Form eines piezoelektrischen Antriebs ausgebildet ist.

10. Gurtaufroller nach einem der Ansprüche 1 bis 9,
**dadurch gekennzeichnet, dass** der Aktuator (32) bezüglich der Gurtrolle (14) radial außenliegend im Wesentlichen benachbart zu der Gurtrolle (14) positioniert ist.

11. Gurtaufroller nach einem der Ansprüche 1 bis 10,
**dadurch gekennzeichnet, dass** der Aktuator (32) bezüglich des Drehglieds (18) radial außenliegend, im Wesentlichen benachbart zu dem Drehglied (18) positioniert ist.

12. Gurtaufroller nach einem der Ansprüche 1 bis 10,
**dadurch gekennzeichnet, dass** der Aktuator (32; 72) auf einer von der Gurtrolle (14) abgewandten Seite des Drehglieds (18) im Wesentlichen benachbart zu dem Drehglied (18) positioniert ist.

13. Gurtaufroller nach einem der Ansprüche 3 bis 12,
**dadurch gekennzeichnet, dass** das erste Trägerteil (20) in Richtung seiner Drehachse (A) verschiebbar gelagert ist und an einer dem Drehglied (20) zugewandten Fläche mindestens ein erstes Reibelement (22) trägt.

14. Gurtaufroller nach einem der Ansprüche 1 bis 13,
**dadurch gekennzeichnet, dass** das Drehglied (18) in Richtung seiner Drehachse (A) verschiebbar gelagert ist.

15. Gurtaufroller nach einem der Ansprüche 3 bis 14,
**dadurch gekennzeichnet, dass** mindestens ein zweites Reibelement (22') an einer dem Drehglied (18) zugewandten Fläche des zweiten Trägerteils (42) angebracht ist.

16. Gurtaufroller nach einem der Ansprüche 3 bis 15.
**dadurch gekennzeichnet, dass** zur Einstellung eines Abstands zwischen dem ersten und dem zweiten Trägerteil (20, 42) eine Rückstellfeder (44) vorhanden ist.

17. Gurtaufroller nach einem der Ansprüche 3 bis 16,
**dadurch gekennzeichnet, dass** zur Festlegung einer Ruhestellung des Drehglieds (18) relativ zu dem ersten und dem zweiten Trägerteil (20, 42) mindestens ein Distanzelement (58, 60) vorhanden ist.

18. Gurtaufroller nach einem der Ansprüche 6 bis 17,
**dadurch gekennzeichnet, dass** die Selbstverstärkungsanordnung ein Federelement (102) umfasst, das dazu eingerichtet ist, eine in Umfangsrichtung des ersten Trägerteils (20) gerichtete Kraft auf das erste Trägerteil (20) aufzubringen.

19. Gurtaufroller nach einem der Ansprüche 1 bis 18,
**dadurch gekennzeichnet, dass** der mindestens eine Reibbelag (22, 22') aus einem magnetischen Material besteht und/oder ein Topfmagnet vorgesehen ist, der eine Magnetkraft auf das Drehglied (18) und/oder das erste Trägerteil (20) aufbringt, um das Drehglied (18) in Richtung des mindestens einen Reibbelags (22, 22') zu drängen.

**20.** Verwendung eines Gurtaufrollers nach einem der Ansprüche 1 bis 19 in einem adaptiven Sicherheitsgurtsystem.

**Claims**

**1.** Belt retractor (10) with a rotatable belt roll (14), a rotary member (18) that can be connected to the belt roll (14) in a torsion-proof manner, and an actuator (32; 72) that generates an actuating force and acts upon at least one frictional element (22, 22') in order to engage the frictional element (22, 22') with the rotary member (18) that can be connected to the belt roll (14) in a torsion-proof manner so as to decelerate a rotational movement of the belt roll (14),
**characterised in that**
an arrangement for self-reinforcing the actuating force generated by the actuator (32; 72) is disposed between the actuator (32; 72) and the rotary member (18).

**2.** Belt retractor according to claim 1,
**characterised in that**
the actuator (32; 72) is connected to an electronic control unit that is configured to control the actuator (32; 72) as a function of at least one occupant-, vehicle- and/or situation-specific parameter in order to effect a deceleration of the rotational movement of the belt roll (14) that is adapted thereto.

**3.** Belt retractor according to claim 1 or 2,
**characterised in that**
the self-reinforcing arrangement comprises a first carrier part (20) that carries at least one first force-amplification element (38; 88; 92) and a second carrier part (42) that carries at least one second force-amplification element (40; 84; 94, 100, 100'), wherein the first and the second carrier parts (20, 42) can be rotated relative to each other as a result of the actuating force generated by the actuator (32; 72).

**4.** Belt retractor according to claim 3,
**characterised in that**
the first force-amplification element (38; 92) comprises an angled wedge face (46; 96, 96') with an angle of inclination ($\alpha$) that is supported on the second force-amplification element (40; 94, 100, 100') in a sliding or rolling manner.

**5.** Belt retractor according to claim 4,
**characterised in that**
the first force-amplification element (92) and the second force-amplification element (94) form a ball/ramp arrangement (90).

**6.** Belt retractor according to claim 3,
**characterised in that**
the first force-amplification element (88) is configured as a thread provided on the first carrier part (20) and the second force-amplification element (84) is configured as a spindle that interacts with the thread (88) provided on the first carrier part (20).

**7.** Belt retractor according to one of claims 3 to 6,
**characterised in that**
the second carrier part (42) is fixed and the first carrier part (20) can be connected to the actuator (32; 72) in order to turn the first carrier part (20) relative to the second carrier part (42).

**8.** Belt retractor according to one of claims 1 to 7,
**characterised in that**
the actuator (32) is configured as a rotating electric machine and can be connected to toothed or worm gearing (26, 28; 52, 54).

**9.** Belt retractor according to one of claims 1 to 8,
**characterised in that**
the actuator (72) is configured as a direct drive or as a piezoelectric drive.

**10.** Belt retractor according to one of claims 1 to 9,

**characterised in that**
the actuator (32) is positioned radially outside the belt roll (14) and essentially adjacent to the belt roll (14).

11. Belt retractor according to one of claims 1 to 10,
**characterised in that**
the actuator is positioned radially outside the rotary member (18) and essentially adjacent to the rotary member (18).

12. Belt retractor according to one of claims 1 to 10,
**characterised in that**
the actuator (32; 72) is positioned on a side of the rotary member (18) that faces away from the belt roll (14) and essentially adjacent to the rotary member (18).

13. Belt retractor according to one of claims 3 to 12,
**characterised in that**
the first carrier part (20) is mounted in such a way that it can be moved along its axis of rotation (A) and carries at least a first frictional element (22) on a surface that faces the rotary member (20).

14. Belt retractor according to one of claims 1 to 13,
**characterised in that**
the rotary member (18) is mounted in such a way that it can be moved along its axis of rotation (A).

15. Belt retractor according to one of claims 3 to 14,
**characterised in that**
at least one second frictional element (22') is attached to a surface of the second carrier part (42) that faces the rotary member (18).

16. Belt retractor according to one of claims 3 to 15,
**characterised in that**
a return spring (44) is provided to set a distance between the first and the second carrier part (20, 42).

17. Belt retractor according to one of claims 3 to 16,
**characterised in that**
at least one spacer element (58, 60) is provided to set a neutral position of the rotary member (18) relative to the first and second carrier parts (20, 42).

18. Belt retractor according to one of claims 6 to 17,
**characterised in that**
the self-reinforcing arrangement comprises a spring element (102) that is configured to apply a force that acts on the first carrier part (20) in a circumferential direction of the first carrier part (20).

19. Belt retractor according to one of claims 1 to 18,
**characterised in that**
the at least one friction lining (22, 22') is made from a magnetic material and/or a pot-type magnet is provided that applies a magnetic force to the rotary member (18) and/or the first carrier part (20) in order to force the rotary member (18) towards the at least one friction lining (22, 22').

20. Use of a belt retractor according to one of claims 1 to 19 in an adaptive seat-belt system.

**Revendications**

1. Enrouleur de ceinture (10) comprenant un rouleau de ceinture mobile en rotation (14), un élément rotatif (18) propre à être relié solidairement en rotation au rouleau de ceinture (14) et un actionneur (32 ; 72) qui produit une force d'actionnement et agit sur au moins un élément de friction (22, 22') pour mettre l'élément de friction (22, 22') en prise avec l'élément rotatif (18) propre à être relié solidairement en rotation au rouleau de ceinture (14) afin de freiner un mouvement de rotation du rouleau de ceinture (14),
**caractérisé en ce que,** entre l'actionneur (32 ; 72) et l'élément rotatif (18), est disposé un dispositif pour l'autorenforcement de la force d'actionnement produite par l'actionneur (32 ; 72).

**2.** Enrouleur de ceinture selon la revendication 1,
**caractérisé en ce que** l'actionneur (32 ; 72) est relié à une unité de commande électronique qui est agencée pour commander l'actionneur (32 ; 72) en fonction d'au moins un paramètre spécifique de l'occupant, spécifique du véhicule et/ou spécifique de la situation, afin de provoquer un freinage du mouvement de rotation du rouleau de ceinture (14) adapté à ce paramètre.

**3.** Enrouleur de ceinture selon la revendication 1 ou 2,
**caractérisé en ce que** le dispositif d'autorenforcement comprend une première partie porteuse (20), qui porte au moins un premier élément de renforcement de force (38 ; 88 ; 92), et une seconde partie porteuse (42) qui porte au moins un second élément de renforcement de force (40 ; 84 ; 94, 100, 100'), la première et la seconde parties porteuses (20, 42) étant propres à être mises en rotation l'une par rapport à l'autre sous l'effet de la force d'actionnement produite par l'actionneur (32 ; 72).

**4.** Enrouleur de ceinture selon la revendication 3,
**caractérisé en ce que** le premier élément de renforcement de force (38 ; 92) comprend une surface de coin oblique (46 ; 96, 96') possédant un angle de pente ($\alpha$), qui prend appui en glissant ou en roulant contre le second élément de renforcement de force (40 ; 94, 100, 100').

**5.** Enrouleur de ceinture selon la revendication 4,
**caractérisé en ce que** le premier élément de renforcement de force (92) et le second élément de renforcement de force (94) forment un dispositif à bille/rampe (90).

**6.** Enrouleur de ceinture selon la revendication 3,
**caractérisé en ce que** le premier élément de renforcement de force (88) est réalisé sous la forme d'un filetage prévu sur la première partie porteuse (20), et le second élément de renforcement de force (84) est réalisé sous la forme d'une vis qui coopère avec le filetage (88) prévu sur la première partie porteuse (20).

**7.** Enrouleur de ceinture selon l'une quelconque des revendications 3 à 6,
**caractérisé en ce que** la seconde partie porteuse (42) est fixe en position et la première partie porteuse (20) est propre à être reliée à l'actionneur (32 ; 72) pour faire tourner la première partie porteuse (20) par rapport à la seconde partie porteuse (42).

**8.** Enrouleur de ceinture selon l'une quelconque des revendications 1 à 7,
**caractérisé en ce que** l'actionneur (32) est réalisé sous la forme d'une machine électrique tournante, et est propre à être relié à un mécanisme à engrenage, ou à vis sans fin (26, 28 ; 52, 54).

**9.** Enrouleur de ceinture selon l'une quelconque des revendications 1 à 8,
**caractérisé en ce que** l'actionneur (72) est réalisé sous la forme d'un entraînement direct ou sous la forme d'un entraînement piézo-électrique.

**10.** Enrouleur de ceinture selon l'une quelconque des revendications 1 à 9,
**caractérisé en ce que** l'actionneur (32) est positionné radialement à l'extérieur par rapport au rouleau de ceinture (14), pratiquement dans le voisinage du rouleau de ceinture (14).

**11.** Enrouleur de ceinture selon l'une quelconque des revendications 1 à 10,
**caractérisé en ce que** l'actionneur (32) est positionné radialement à l'extérieur par rapport à l'élément rotatif (18), pratiquement dans le voisinage de l'élément rotatif (18).

**12.** Enrouleur de ceinture selon l'une quelconque des revendications 1 à 10,
**caractérisé en ce que** l'actionneur (32 ; 72) est positionné sur un côté de l'élément rotatif (18) qui est éloigné du rouleau de ceinture (14), pratiquement dans le voisinage de l'élément rotatif (18).

**13.** Enrouleur de ceinture selon l'une quelconque des revendications 3 à 12,
**caractérisé en ce que** la première partie porteuse (20) est montée mobile en translation axiale selon la direction de son axe de rotation (A) et porte au moins un premier élément de friction (22) sur une surface dirigée vers l'élément rotatif (20).

**14.** Enrouleur de ceinture selon une des revendications 1 à 13,

**caractérisé en ce que** l'élément rotatif (18) est monté mobile en translation selon la direction de son axe de rotation (A).

15. Enrouleur de ceinture selon l'une quelconque des revendications 3 à 14,
**caractérisé en ce qu'**au moins un second élément de friction (22') est attaché à une surface de la seconde partie porteuse (42) qui est dirigée vers l'élément rotatif (18).

16. Enrouleur de ceinture selon l'une quelconque des revendications 3 à 15,
**caractérisé en ce qu'**un ressort de rappel (44) est prévu pour établir une distance entre la première et la seconde partie porteuse (20, 42).

17. Enrouleur de ceinture selon l'une quelconque des revendications 3 à 16,
**caractérisé en ce qu'**au moins un élément entretoise (58, 60) est prévu pour fixer la position de repos de l'élément rotatif (18) par rapport à la première et à la seconde partie porteuse (20, 42).

18. Enrouleur de ceinture selon l'une quelconque des revendications 6 à 17,
**caractérisé en ce que** le dispositif d'autorenforcement comprend un élément élastique (102), qui est agencé pour exercer sur la première partie porteuse (20) une force dirigée dans la direction circonférentielle de la première partie porteuse (20).

19. Enrouleur de ceinture selon l'une quelconque des revendications 1 à 18,
**caractérisé en ce que** l'au moins une garniture de friction (22, 22') est composée d'une matière magnétique et/ou il est prévu un aimant en cloche qui exerce une force magnétique sur l'élément rotatif (18) et/ou sur la première partie porteuse (20) pour pousser l'élément rotatif (18) en direction de l'au moins une garniture de friction (22, 22').

20. Utilisation d'un enrouleur de ceinture selon l'une quelconque des revendications 1 à 19 dans un système de ceinture de sécurité adaptatif.

# FIG 1

## FIG 2

40

46

48

α

38

## FIG 3

$F_{Ly}$

$F_{Lx}$

$F_L$

38

46

α

$F_{Ein}$

$F_R$

υ

$F_N$

# FIG 4

FIG 5

FIG 6

# FIG 7

FIG 8

# FIG 9

FIG 10A

FIG 10B

FIG 10C

FIG 11

FIG 12

# FIG 13

FIG 14

FIG 15

FIG 16

FIG 17

FIG 18

**FIG 19**

FIG 20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19640842 A1